# EUROPEAN PATENT SPECIFICATION

(11) **EP 4 443 283 B1**
(45) Date of publication and mention of the grant of the patent: **28.10.2026**
(21) Application number: 22923608.8
(22) Date of filing: 23.12.2022
(51) Int. Cl.: G06F 3/04842, G06F 3/0482, G06F 1/16, G06F 3/0346, G06F 3/0485, G06F 3/04883, G06F 3/04886, G06F 3/04847, G06F 3/01, H04M 1/72454, H04M 1/72457

(54) **INFORMATION INTERACTION METHOD, WATCH, AND COMPUTER READABLE STORAGE MEDIUM**
INFORMATIONSINTERAKTIONSVERFAHREN, UHR UND COMPUTERLESBARES SPEICHERMEDIUM
PROCÉDÉ D'INTERACTION D'INFORMATIONS, MONTRE ET SUPPORT DE STOCKAGE LISIBLE PAR ORDINATEUR

(30) Priority: 26.01.2022 CN 202210095749
(43) Date of publication of application: 09.10.2024
(73) Proprietor: Huawei Technologies Co., Ltd., Shenzhen, Guangdong 518129 (CN)
(72) Inventor: WANG, Geping, Shenzhen, Guangdong 518129 (CN); XU, Jie, Shenzhen, Guangdong 518129 (CN)
(74) Representative: Körber, Martin Hans
(86) International application number: PCT/CN2022/141638
(87) International publication number: WO 2023/142822

(56) References cited:
- CN-A- 106 067 834
- CN-A- 110 427 151
- CN-A- 113 821 154
- US-A1- 2015 105 125
- US-A1- 2016 077 620
- US-A1- 2016 231 772
- US-A1- 2016 299 570
- US-A1- 2016 313 869
- US-A1- 2017 038 845
- US-A1- 2019 213 037

## Description

### TECHNICAL FIELD

This application pertains to the terminal field, and in particular relates to an information exchange method, a watch, and a computer-readable storage medium.

### BACKGROUND

With continuous promotion of intelligent wearable devices, more users start to wear smart watches (also referred to as smart bands).

A manner in which the user uses the smart watch every day is regular, and the user usually opens fixed software at a fixed time point and place.

In a current smart watch operation solution, the user needs to repeatedly perform complex operations each time to search for and open these pieces of fixed software, resulting in a poor user experience.

US 2019/0213037 A1 discloses a wearable device for executing a plurality of applications and a method for operating the same. The wearable device includes a touch screen and a processor configured to display an execution screen of a first application on the touch screen, receive a first input for simultaneously executing the first application and a second application related to the first application, and display a first execution screen corresponding to the execution screen in a first part of the touch screen and a second execution screen among a plurality of execution screens corresponding to the second application in a second part of the
touch screen, different from the first part, in response to the first input, wherein the second part surrounds the first part. US 2016/0313869 A1 discloses a wearable device, such as a smart watch, and a method for controlling the same. The smart watch is connectable to a mobile terminal, and includes a display unit configured to display a watch image and a controller configured to control the display unit to reduce the watch image when a preset event occurs and displays notification information in an empty space of the display unit formed by reducing the watch image.

### SUMMARY

Embodiments of this application provide an information exchange method, a watch, and a computer-readable storage medium, to resolve a problem in an existing solution that a poor user experience is caused by complex operations performed by a user when searching for software. The present invention is defined by the enclosed claims. In the following description, embodiments which are not covered by the clams are to be considered as examples necessary for understanding the invention.

According to a first aspect, an embodiment of this application provides an information exchange method, applied to an electronic device, and including:

The electronic device displays a first interface in a first display region of a display.

The electronic device reduces the first display region, and displays recommendation information in a second display region of the display. A reduced first display region is still used to display the first interface. The second display region is a region that is on the display and that does not overlap the reduced first display region.

The electronic device detects a first gesture operation of a user. The first gesture operation is associated with a position of the reduced first display region on the display.

The electronic device opens, in response to the first gesture operation, an interface corresponding to the recommendation information.

It should be noted that when the user uses the electronic device, the electronic device may display the first interface in the first display region of the display.

The first interface may be understood as an interface displayed by the electronic device before the electronic device obtains the recommendation information. For example, the first interface may be a home screen, a control interface, a software interface, or the like of the electronic device.

After obtaining the recommendation information, the electronic device may reduce the first display region, and display the recommendation information in the second display region of the display.

The reduced first display region is still used to display the first interface.

The second display region is a region that is on the display and that does not overlap the first display region. Alternatively, the second display region may be understood as a region that is left on the display after the electronic device reduces the first display region.

The recommendation information may be understood as information about software recommended by the electronic device to the user.

A manner in which the electronic device obtains the recommendation information may be set based on an actual requirement. For example, in some embodiments, the electronic device may predict the recommendation information based on behavior information of another electronic device. In some other embodiments, the electronic device may predict the recommendation information based on a usage habit of the user and a current time point/time period. In some other embodiments, the electronic device may predict the recommendation information based on a current place. In some other embodiments, the electronic device may alternatively predict the recommendation information in another manner. A specific manner in which the electronic device obtains the recommendation information is not limited in embodiments of this application.

Subsequently, after the user views the recommendation information, if recommended software corresponding to the recommendation information is software that the user wants to use, the user may perform the first gesture operation.

A specific form of the first gesture operation may be set based on a requirement. For example, the gesture operation may include one or more of gesture operations such as raising a wrist, pressing a wrist down, and flipping a wrist.

In addition, the first gesture operation may further be associated with the position of the reduced first display region on the display, and different positions may correspond to different first gesture operations.

When detecting the first gesture operation, the electronic device opens, in response to the first gesture operation, the interface corresponding to the recommendation information.

According to the information exchange method, the electronic device may display the recommendation information in the second display region that does not overlap the first display region, to prevent the recommendation information from blocking the first interface in the first display region, and reduce impact of the recommendation information on the first interface.

In addition, the electronic device may recommend corresponding recommended software to the user based on the recommendation information. When the recommended software corresponding to the recommendation information is the software that the user wants to use, the user may directly open, based on the first gesture operation, the interface corresponding to the recommendation information. This effectively reduces operations that need to be performed by the user to search for and open the software, and saves time consumed by the user to search for the software.

In addition, when opening, based on the first gesture operation, the interface corresponding to the recommendation information, the user may complete the first gesture operation with one hand, freeing the other hand of the user, which is particularly applicable to a scenario in which the user can use the electronic device with only one hand.

In a possible implementation of the first aspect, that the electronic device reduces the first display region includes:

The electronic device proportionally reduces the first interface based on a preset reduction proportion.

The reduced first display region is located in a center of the display. Alternatively, an edge on a side of the reduced first display region is in contact with an edge on a side of the display.

It should be noted that the first display region is used to display the first interface. Therefore, in some embodiments, the electronic device may reduce the first display region in a manner of proportionally reducing the first interface.

The first interface may include one or more of elements such as a text, an image, and an icon.

When proportionally reducing the first interface, the electronic device may proportionally reduce all elements in the first interface, or the electronic device may proportionally reduce some elements in the first interface.

In addition, the reduction proportion may be a proportion set by default when the electronic device is delivered from a factory, or the reduction proportion may be a proportion preset by the user on the electronic device.

When the electronic device reduces the first display region in the manner of proportionally reducing the first interface, the recommendation information can be prevented from blocking the first interface, and integrity of the first interface can be ensured, so that the user can view both the recommendation information and the complete first interface, and the user is provided with a good user experience.

In an embodiment not covered by the claims, that the electronic device reduces the first display region includes:

The electronic device translates the first interface toward a preset direction.

It should be noted that, in some other embodiments not covered by the claims, the electronic device may translate the first interface toward the preset direction, to reduce the first display region.

In a process of translating the first interface by the electronic device, some content of the first interface is moved out of the display and cannot be displayed. Therefore, a size of the first interface that needs to be displayed by the display is reduced, and the first display region is reduced.

The preset direction may be set based on a requirement. For example, a posture displayed on the display when the user views the electronic device is used as a reference, and the preset direction may be any one of directions such as an upper left part, an upper middle part, an upper right part, a right middle part, a lower right part, a lower middle part, a lower left part, and a left middle part of the display.

When the electronic device reduces the first display region in a manner of translating the first interface, the electronic device may keep a size of each element in the first interface unchanged, to ensure that the user conveniently views and operates the elements in the first interface, and avoid a case in which the user cannot clearly see or operate the elements in the first interface because the elements are excessively small.

In the first aspect, that the electronic device reduces the first display region includes:

The electronic device flips the first interface.

It should be noted that, in some other embodiments, the electronic device may alternatively reduce the first display region in a manner of flipping the first interface.

That the electronic device flips the first interface may be understood as that the electronic device determines a flip axis on a plane on which the display is located, and rotates the first interface based on the flip axis.

When the electronic device reduces the first display region in the manner of flipping the first interface, the integrity of the first interface can be ensured, and an original size of each element in the first interface can be kept, so that the user can view the complete first interface and conveniently view and operate the elements in the first interface.

In a possible implementation of the first aspect, that the electronic device flips the first interface includes:

The electronic device obtains a preset flip axis, and flips the first interface based on the flip axis. The flip axis is located in the first display region.

It should be noted that, in some embodiments, a flip axis may be preset on the electronic device, and the flip axis is located in the first display region.

The electronic device may flip the first interface based on the flip axis.

In a possible implementation of the first aspect, that the electronic device flips the first interface includes:

The electronic device obtains a preset flip point, and flips the first interface toward an inner side of the display by using a tangent line corresponding to the flip point as a flip axis. The flip point is located at an edge of the first display region. The tangent line corresponding to the flip point is a tangent line that passes through the flip point and that is of the first display region.

It should be noted that, in some other embodiments, a flip point may be preset on the electronic device, and the flip point is located at the edge of the first display region.

In this case, the electronic device may determine, based on the flip point, a tangent line that passes through the flip point and the first display region, and determine the tangent line as the flip axis.

Then, the electronic device may flip the first interface based on the flip axis.

In a possible implementation of the first aspect, when the reduced first display region is located on a first side of the display, the first gesture operation is raising a wrist.

It should be noted that, in some embodiments, a specific form of the first gesture operation may be related to a position of the reduced first display region.

When the reduced first display region is located on the first side of the display, the first gesture operation may be raising a wrist.

A specific orientation of the first side may be set based on an actual requirement. For example, the posture displayed on the display when the user views the electronic device is used as a reference, and the first side may be located in any one or more of orientations such as the upper left part, the upper middle part, the upper right part, the left middle part, the lower right part, the lower middle part, the lower left part, and the left middle part of the display.

In a possible implementation of the first aspect, when the reduced first display region is located on a second side of the display, the first gesture operation is pressing a wrist down.

It should be noted that, in some other embodiments, when the reduced first display region is located on the second side of the display, the first gesture operation may be pressing a wrist down.

A specific orientation of the second side may be set based on an actual requirement. For example, the posture displayed on the display when the user views the electronic device is used as a reference, and the first side may be located in any one or more of orientations such as the upper left part, the upper middle part, the upper right part, the left middle part, the lower right part, the lower middle part, the lower left part, and the left middle part of the display.

In addition, the first side and the second side may be in different orientations. In an example, the first side may be a lower half side of the display, including the lower left part, the lower middle part, and the lower right part of the display, and the second side may be an upper half side of the display, including the upper left part, the upper middle part, and the upper right part of the display. In another example, the first side may be a left half side of the display, including the upper left part, the left middle part, and the lower left part of the display, and the second side may be a right half side of the display, including the upper right part, the right middle part, and the lower right part of the display. In some other examples, the first side and the second side may alternatively be in other orientations. Specific orientations of the first side and the second side are not limited in embodiments of this application.

In a possible implementation of the first aspect, the first gesture operation is further associated with a position at which the electronic device is worn by the user.

The first side is the lower left part of the display, the electronic device is worn on a left hand of the user, and the first gesture operation is raising a left wrist.

Alternatively, the first side is the upper left part of the display, the electronic device is worn on a left hand of the user, and the first gesture operation is raising a left wrist.

Alternatively, the first side is the lower right part of the display, the electronic device is worn on a right hand of the user, and the first gesture operation is raising a right wrist.

Alternatively, the first side is the upper right part of the display, the electronic device is worn on a right hand of the user, and the first gesture operation is raising a right wrist.

It should be noted that the first gesture operation may further be associated with the position at which the electronic device is worn by the user.

The position at which the electronic device is worn by the user may be actively confirmed by the user, or may be detected by the electronic device.

In an example, after wearing the electronic device, the user may actively select a corresponding wearing position, for example, a left hand or a right hand, in an interface for setting a wearing position of the electronic device.

**In** another example, the electronic device may collect motion data of the electronic device based on a motion sensor, analyze a movement trajectory of the electronic device based on the motion data, and identify, based on the movement trajectory, the position at which the electronic device is worn by the user.

**In** some other examples, the electronic device may alternatively determine, in another manner, the position at which the electronic device is worn by the user. A manner in which the electronic device determines the position at which the electronic device is worn by the user is not limited in embodiments of this application.

**In** some embodiments, when the electronic device is worn on the left hand of the user, the first side may be the lower left part of the display, and display information may be displayed on the upper right part of the display.

Alternatively, the first side may be the upper left part of the display, and display information may be displayed on the lower right part of the display.

**In** this case, the first gesture operation may be raising the left wrist, and the user may open, in a manner of raising the left wrist, the interface corresponding to the recommendation information.

**In** some other embodiments, when the electronic device is worn on the right hand of the user, the first side may be the lower right part of the display, and the display information may be displayed on the upper left part of the display.

Alternatively, the first side may be the upper right part of the display, and the display information may be displayed on the lower left part of the display.

In this case, the first gesture operation may be raising the right wrist, and the user may open, in a manner of raising the right wrist, the interface corresponding to the recommendation information.

In a possible implementation of the first aspect, the first gesture operation is further associated with a position at which the electronic device is worn by the user.

The second side is the upper right part of the display, the electronic device is worn on the left hand of the user, and the first gesture operation is pressing the left wrist down.

Alternatively, the second side is the lower right part of the display, the electronic device is worn on the left hand of the user, and the first gesture operation is pressing the left wrist down.

Alternatively, the second side is the upper left part of the display, the electronic device is worn on the right hand of the user, and the first gesture operation is pressing the right wrist down.

Alternatively, the second side is the lower left part of the display, the electronic device is worn on the right hand of the user, and the first gesture operation is pressing the right wrist down.

It should be noted that, in some embodiments, when the electronic device is worn on the left hand of the user, the first side may be the upper right part of the display, and the display information may be displayed on the lower left part of the display.

Alternatively, the first side may be the lower right part of the display, and the display information may be displayed on the upper left part of the display.

In this case, the first gesture operation may be pressing the left wrist down, and the user may open, in a manner of pressing the left wrist down, the interface corresponding to the recommendation information.

In some other embodiments, when the electronic device is worn on the right hand of the user, the first side may be the upper left part of the display, and the display information may be displayed on the lower right part of the display.

Alternatively, the first side may be the lower left part of the display, and the display information may be displayed on the upper right part of the display.

In this case, the first gesture operation may be pressing the right wrist down, and the user may open, in a manner of pressing the right wrist down, the interface corresponding to the recommendation information.

In a possible implementation of the first aspect, when the electronic device is worn on a first hand of the user, the first gesture operation is raising a wrist.

It should be noted that, in some embodiments, the first gesture operation may further be related to the wearing position of the electronic device.

When the electronic device is worn on the first hand of the user, the first gesture operation may be raising a wrist.

The first hand may be the left hand or the right hand of the user.

In a possible implementation of the first aspect, when the electronic device is worn on a second hand of the user, the first gesture operation is pressing a wrist down.

It should be noted that, in some other embodiments, when the electronic device is worn on the second hand of the user, the first gesture may be pressing a wrist down.

The second hand may be the left hand or the right hand of the user, and the first hand and the second hand are different hands.

In a possible implementation of the first aspect, when the electronic device is worn on the left hand of the user, the reduced first display region is located at a first position.

When the electronic device is worn on the right hand of the user, the reduced first display region is located at a second position.

The first position and the second position are symmetrical along a central axis of the electronic device.

It should be noted that, in some embodiments, the position of the reduced first display region may be related to the wearing position of the electronic device.

When the electronic device is worn on the left hand of the user, the reduced first display region may be located at the first position. When the electronic device is worn on the right hand of the user, the reduced first display region may be located at the second position.

The first position and the second position may be symmetrical along the central axis of the electronic device. For example, when the first position is the upper right part of the display, the second position may be the upper left part of the display. When the first position is the lower left part of the display, the second position may be the lower right part of the display.

In the foregoing implementation, the electronic device may place, based on the wearing position of the electronic device, the reduced first display region at positions that are symmetrical along the central axis, fully considering usage habits of different people, so that users with different usage habits can have a same user experience, and target users of the electronic device are increased.

It should be understood that the foregoing implementation should not be understood as a limitation on the position of the reduced first display region. In some other implementations, the position of the reduced first display region may alternatively be unrelated to the position at which the electronic device is worn by the user.

In an example, the reduced first display region may be displayed at a fixed position.

In some other examples, the reduced first display region may be restricted by another factor (for example, a type of the recommendation information and a quantity of the recommendation information), and displayed at a corresponding position.

In addition, when the electronic device is worn on the first hand of the user, the first gesture operation may be a gesture operation performed based on the first hand. When the electronic device is worn on the second hand of the user, the second gesture operation may be a gesture operation performed based on the second hand.

In a possible implementation of the first aspect, after the electronic device reduces the first display region, and displays recommendation information in a second display region of the display, the method further includes:

When detecting a switching operation of the user, the electronic device switches the recommendation information displayed in the second display region to recommendation information corresponding to another piece of recommended software.

It should be noted that, when predicting a plurality of pieces of recommended software, the electronic device may display, in the second display region, recommendation information corresponding to all pieces of recommended software, or the electronic device may display, in the second display region, recommendation information corresponding to some pieces of recommended software.

When the electronic device displays, in the second display region, the recommendation information corresponding to some pieces of recommended software, if the electronic device detects the switching operation of the user, in response to the switching operation, the electronic device may switch the recommendation information displayed in the second display region to other recommendation information that is not displayed, so that the user views different recommendation information.

In a possible implementation of the first aspect, the switching operation includes one or more of touching the display, pressing a physical button of the electronic device, and rotating a rotatable component of the electronic device.

It should be noted that a specific form of the switching operation may be set based on an actual requirement.

In an example, the display is a touchscreen, and the switching operation may be that the user touches the display. In another example, the electronic device is provided with a physical button, and the switching operation may be that the user presses the physical button. In another example, the electronic device is provided with a rotatable component, and the switching operation may be that the user rotates the rotatable component. In some other examples, the switching operation may alternatively be represented in another form. The specific form of the switching operation is not limited in embodiments of this application.

In a possible implementation of the first aspect, after the electronic device reduces the first display region, and displays recommendation information in a second display region of the display, the method further includes:

When detecting a second gesture operation of the user, the electronic device restores a size of the reduced first display region, and closes the second display region.

It should be noted that the recommended software corresponding to the recommendation information may not be the software that the user wants to use.

Therefore, after viewing the recommendation information, if the user does not find the software that the user wants to use, the user may perform the second gesture operation.

In this case, in response to the second gesture operation, the electronic device may restore the size of the reduced first display region, close the second display region, and stop displaying the recommendation information.

In a possible implementation of the first aspect, the electronic device is a watch.

It should be noted that a device type of the electronic device may be a watch. A watch face of the watch may be a round watch face, a rectangular watch face, an elliptical watch face, or a watch face in another shape.

Without loss of generality, the electronic device may alternatively be any one of various types of electronic devices such as an augmented reality (augmented reality, AR) device/a virtual reality (virtual reality, VR) device, smart glasses, a glove having a display, and a finger ring having a display. A specific type of the electronic device is not limited in embodiments of this application.

In a possible implementation of the first aspect, the first interface is used to display watch face information of the watch.

It should be noted that when the electronic device is the watch, the first interface may be used to display watch face information of the watch.

In a possible implementation of the first aspect, the recommendation information includes a text and/or an icon.

It should be noted that when the electronic device displays the recommendation information, the recommendation information may include one or more of information such as a text or an icon.

In a possible implementation of the first aspect, the interface corresponding to the recommendation information occupies all regions of the display.

It should be noted that, when opening the interface corresponding to the recommendation information, the electronic device may open the interface corresponding to the recommendation information in full screen on the display.

In this case, the interface corresponding to the recommendation information occupies all the regions of the display.

In a possible implementation of the first aspect, a region in which the first interface is displayed on the display is the first display region.

Alternatively, when the first display region is not reduced, the first display region is an entire display region of the display.

Alternatively, both the display and the first display region that is not reduced are circles.

Alternatively, the reduced first display region and the display are two eccentric circles, and a radius of the reduced first display region is less than a radius of the display.

Alternatively, the electronic device is the watch, and the rotatable component of the electronic device is a watch crown.

It should be noted that, in some embodiments, the region in which the first interface is displayed on the display may be understood as the first display region.

In some embodiments, the display may be a round display, and the first display region that is not reduced may also be a round region.

In some embodiments, the display may be a round display, and the reduced first display region may be set concentrically with the display, or the reduced first display region may be set eccentrically with the display.

When the reduced first display region is set concentrically with the display, the reduced first display region and the display are two concentric circles. When the reduced first display region is set eccentrically with the display, the reduced first display region and the display are two eccentric circles.

In some embodiments, the electronic device may be a watch, and a rotatable component is disposed on the watch. The rotatable component may be a watch crown of the watch, or the rotatable component may be a watch frame of the watch.

In a possible implementation of the first aspect, a quantity of the recommendation information is greater than 1.

That the electronic device opens, in response to the first gesture operation, an interface corresponding to the recommendation information includes:

The electronic device determines target information from the recommendation information based on a gesture type corresponding to the first gesture operation.

The electronic device opens an interface corresponding to the target information.

According to a second aspect, an embodiment of this application provides an information exchange apparatus, applied to an electronic device, and including:
a first display module, configured to display a first interface in a first display region of a display;
a recommendation display module, configured to reduce the first display region, and display recommendation information in a second display region of the display, where a reduced first display region is still used to display the first interface, and the second display region is a region that is on the display and that does not overlap the reduced first display region;
a first gesture module, configured to detect a first gesture operation of a user, where the first gesture operation is associated with a position of the reduced first display region on the display; and
a first responding module, configured to open, in response to the first gesture operation, an interface corresponding to the recommendation information.

In a possible implementation of the second aspect, the recommendation display module includes:
a proportionally reducing submodule, configured to proportionally reduce the first interface based on a preset reduction proportion.

The reduced first display region is located in a center of the display. Alternatively, an edge on a side of the reduced first display region is in contact with an edge on a side of the display.

In a possible implementation of the second aspect, the recommendation display module includes:
a translation submodule, configured to translate the first interface toward a preset direction.

In the second aspect, the recommendation display module includes:
a flip submodule, configured to flip the first interface.

In a possible implementation of the second aspect, the flip submodule is specifically configured to obtain a preset flip axis, and flip the first interface based on the flip axis. The flip axis is located in the first display region.

In a possible implementation of the second aspect, the flip submodule is specifically configured to obtain a preset flip point, and flip the first interface toward an inner side of the display by using a tangent line corresponding to the flip point as a flip axis. The flip point is located at an edge of the first display region. The tangent line corresponding to the flip point is a tangent line that passes through the flip point and that is of the first display region.

In a possible implementation of the second aspect, when the reduced first display region is located on a first side of the display, the first gesture operation is raising a wrist.

In a possible implementation of the second aspect, when the reduced first display region is located on a second side of the display, the first gesture operation is pressing a wrist down.

In a possible implementation of the second aspect, the first gesture operation is further associated with a position at which the electronic device is worn by the user.

The first side is a lower left part of the display, the electronic device is worn on a left hand of the user, and the first gesture operation is raising a left wrist.

Alternatively, the first side is an upper left part of the display, the electronic device is worn on a left hand of the user, and the first gesture operation is raising a left wrist.

Alternatively, the first side is a lower right part of the display, the electronic device is worn on a right hand of the user, and the first gesture operation is raising a right wrist.

Alternatively, the first side is an upper right part of the display, the electronic device is worn on a right hand of the user, and the first gesture operation is raising a right wrist.

In a possible implementation of the second aspect, the first gesture operation is further associated with a position at which the electronic device is worn by the user.

The second side is the upper left part of the display, the electronic device is worn on the left hand of the user, and the first gesture operation is pressing the left wrist down.

Alternatively, the second side is the lower right part of the display, the electronic device is worn on the left hand of the user, and the first gesture operation is pressing the left wrist down.

Alternatively, the second side is the upper right part of the display, the electronic device is worn on the right hand of the user, and the first gesture operation is pressing the right wrist down.

Alternatively, the second side is the lower left part of the display, the electronic device is worn on the right hand of the user, and the first gesture operation is pressing the right wrist down.

In a possible implementation of the second aspect, when the electronic device is worn on a first hand of the user, the first gesture operation is raising a wrist.

In a possible implementation of the second aspect, when the electronic device is worn on a second hand of the user, the first gesture operation is pressing a wrist down.

In a possible implementation of the second aspect, when the electronic device is worn on the left hand of the user, the reduced first display region is located at a first position.

When the electronic device is worn on the right hand of the user, the reduced first display region is located at a second position.

The first position and the second position are symmetrical along a central axis of the electronic device.

In a possible implementation of the second aspect, the apparatus further includes:
a switching module, configured to: when a switching operation of the user is detected, switch the recommendation information displayed in the second display region to recommendation information corresponding to another piece of recommended software.

In a possible implementation of the second aspect, the switching operation includes one or more of touching the display, pressing a physical button of the electronic device, and rotating a rotatable component of the electronic device.

In a possible implementation of the second aspect, the apparatus further includes:
a second responding module, configured to: when a second gesture operation of the user is detected, restore a size of the reduced first display region, and close the second display region.

In a possible implementation of the second aspect, the electronic device is a watch.

In a possible implementation of the second aspect, the first interface is used to display watch face information of the watch.

In a possible implementation of the second aspect, the recommendation information includes a text and/or an icon.

In a possible implementation of the second aspect, the interface corresponding to the recommendation information occupies all regions of the display.

In a possible implementation of the second aspect, a region in which the first interface is displayed on the display is the first display region.

Alternatively, when the first display region is not reduced, the first display region is an entire display region of the display.

Alternatively, both the display and the first display region that is not reduced are circles.

Alternatively, the reduced first display region and the display are two eccentric circles, and a radius of the reduced first display region is less than a radius of the display.

Alternatively, the electronic device is the watch, and the rotatable component of the electronic device is a watch crown.

**In** a possible implementation of the second aspect, a quantity of the recommendation information is greater than 1.

The first responding module includes:
a target submodule, configured to determine target information from the recommendation information based on a gesture type corresponding to the first gesture operation; and
an interface submodule, configured to open an interface corresponding to the target information.

According to a third aspect, an embodiment of this application provides an electronic device, including a memory, a processor, and a computer program that is stored in the memory and that can be run on the processor. The electronic device is configured to implement the method according to any one of the first aspect when executing the computer program.

According to a fourth aspect, an embodiment of this application provides a watch, including a memory, a processor, and a computer program that is stored in the memory and that can be run on the processor. The watch is configured to implement the method according to any one of the first aspect when executing the computer program.

According to a fifth aspect, an embodiment of this application provides a computer-readable storage medium. The computer-readable storage medium is configured to store a computer program. When the computer program is executed by a processor, the method according to any one of the first aspect is implemented.

According to a sixth aspect, an embodiment of this application provides a computer program product. When the computer program product is configured to run on a watch, the watch is enabled to perform the method according to any one of the first aspect.

According to a seventh aspect, an embodiment of this application provides a chip system. The chip system includes a memory and a processor. The processor is configured to execute a computer program stored in the memory, to implement the method according to any one of the first aspect.

Beneficial effects of embodiments of this application compared with a conventional technology are as follows:

In the information exchange method provided in this embodiment of this application, the electronic device may display the first interface in the first display region of the display. After obtaining the recommendation information, the electronic device may reduce the first display region, and display the recommendation information in the second display region. The second display region is a region that is on the display and that does not overlap the reduced first display region. Therefore, the electronic device may display the recommendation information in the second display region, to prevent the recommendation information from blocking the first interface, and reduce impact of the recommendation information on the first interface.

In addition, when detecting the first gesture operation of the user, the electronic device may open, in response to the first gesture operation, the interface corresponding to the recommendation information. To be specific, after viewing the recommendation information, the user may directly open, based on the first gesture operation, the interface corresponding to the recommendation information. This greatly simplifies steps of searching for and opening software by the user, can effectively improve user experience, and has strong usability and practicability.

### BRIEF DESCRIPTION OF DRAWINGS

FIG. 1 is a schematic diagram of a structure of a smart watch according to an embodiment of this application;
FIG. 2 is a schematic diagram of a scenario according to an embodiment of this application;
FIG. 3 is a schematic diagram of another scenario according to an embodiment of this application;
FIG. 4 is a schematic diagram of another scenario according to an embodiment of this application;
FIG. 5 is a schematic diagram of another scenario according to an embodiment of this application;
FIG. 6 is a schematic diagram of another scenario according to an embodiment of this application;
FIG. 7 is a schematic diagram of another scenario according to an embodiment of this application;
FIG. 8 is a schematic diagram of another scenario according to an embodiment of this application;
FIG. 9 is a schematic diagram of another scenario according to an embodiment of this application;
FIG. 10 is a schematic diagram of another scenario according to an embodiment of this application;
FIG. 11 is a schematic diagram of another scenario according to an embodiment of this application;
FIG. 12 is a schematic diagram of another scenario according to an embodiment of this application;
FIG. 13 is a schematic diagram of another scenario according to an embodiment of this application;
FIG. 14 is a schematic diagram of another scenario according to an embodiment of this application;
FIG. 15 is a schematic diagram of another scenario according to an embodiment of this application;
FIG. 16 is a schematic diagram of another scenario according to an embodiment of this application;
FIG. 17 is a schematic diagram of another scenario according to an embodiment of this application;
FIG. 18 is a schematic diagram of another scenario according to an embodiment of this application;
FIG. 19 is a schematic diagram of another scenario according to an embodiment of this application;
FIG. 20 is a schematic diagram of another scenario according to an embodiment of this application;
FIG. 21 is a schematic diagram of another scenario according to an embodiment of this application;
FIG. 22 is a schematic diagram of another scenario according to an embodiment of this application;
FIG. 23 is a schematic diagram of another scenario according to an embodiment of this application;
FIG. 24 is a schematic diagram of another scenario according to an embodiment of this application;
FIG. 25 is a schematic diagram of another scenario according to an embodiment of this application;
FIG. 26 is a schematic diagram of another scenario according to an embodiment of this application;
FIG. 27 is a schematic diagram of another scenario according to an embodiment of this application;
FIG. 28 is a schematic diagram of another scenario according to an embodiment of this application;
FIG. 29 is a schematic diagram of another scenario according to an embodiment of this application;
FIG. 30 is a schematic diagram of another scenario according to an embodiment of this application;
FIG. 31 is a schematic diagram of another scenario according to an embodiment of this application;
FIG. 32 is a schematic diagram of another scenario according to an embodiment of this application;
FIG. 33 is a schematic diagram of another scenario according to an embodiment of this application;
FIG. 34 is a schematic diagram of another scenario according to an embodiment of this application; and
FIG. 35 is a schematic diagram of another scenario according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application means any combination and all possible combinations of one or more associated listed items, and includes these combinations.

As used in the specification and the appended claims of this application, according to the context, the term "if" may be interpreted as "when" or "once" or "in response to determining" or "in response to detecting". Similarly, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of the specification and claims of this application, the terms "first", "second", "third", and the like are only intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in the specification do not necessarily refer to a same embodiment. Instead, the statements mean "one or more but not all of embodiments", unless otherwise specifically emphasized in another manner. The terms "include", "contain", and "have", and variants thereof all mean "include but are not limited to", unless otherwise specifically emphasized in another manner.

With continuous promotion of intelligent wearable devices, more users start to wear smart watches (also referred to as smart bands).

A manner in which the user uses the smart watch every day is regular, and the user usually opens fixed software at a fixed time point and place. The software may include a system service and/or an application.

For example, in some scenarios, the user may be accustomed to enabling a weather service of the smart watch at about 8:00 every morning to view a weather condition of the day. In some other scenarios, the user may be accustomed to opening a sports application of the smart watch after arriving at a swimming pool to collect statistics on swimming data.

However, in a current smart watch operation solution, the user needs to repeatedly perform complex operations each time to search for and open commonly used software, resulting in a poor user experience.

For example, it is assumed that more than 40 pieces of software are installed on the smart watch, but a display of the smart watch is small, and a same page can display only nine pieces of software. Therefore, the smart watch needs to arrange and display the more than 40 pieces of software on six pages.

In this case, if the sports application commonly used by the user is located on the fifth page, each time the user opens the sports application, the user needs to flip page by page to the fifth page, and then can search for and open the sports application on the fifth page, resulting in complex operations and a poor user experience.

In view of this, embodiments of this application provide an information exchange method. When the smart watch is in a screen-on state, the smart watch may display recommendation information to the user. The recommendation information includes information about recommended software. When the recommended software is software that the user wants to open, the user may perform a first gesture operation, and the smart watch may directly open the recommended software in response to the first gesture operation. This simplifies operations of searching for and opening commonly used software by the user, and has strong usability and practicability.

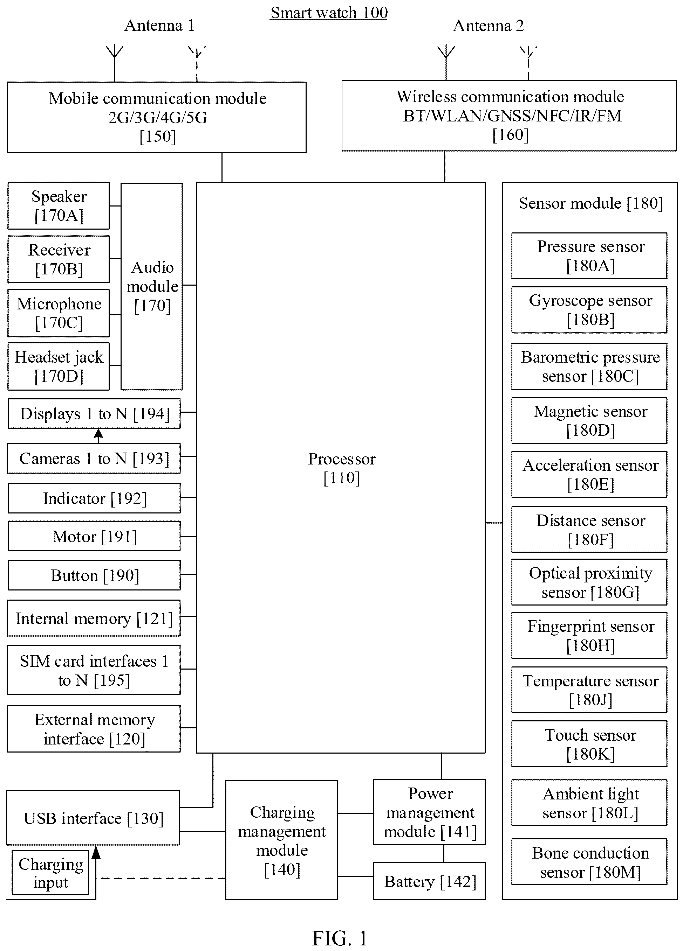

Refer to FIG. 1. FIG. 1 is a schematic diagram of a structure of an example of a smart watch 100 according to an embodiment of this application.

As shown in FIG. 1, the smart watch 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetching and instruction execution.

A memory may further be disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the smart watch 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI may be configured to connect the processor 110 to a peripheral device like the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the smart watch 100. The processor 110 communicates with the display 194 through the DSI, to implement a display function of the smart watch 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI, or the like.

The USB interface 130 is an interface that conforms to a USB standard specification, and may be specifically a mini USB interface, a micro USB interface, a USB Type-C interface, or the like. The USB interface 130 may be configured to be connected to a charger to charge the smart watch 100, or may be configured to transmit data between the smart watch 100 and a peripheral device, or may be configured to be connected to a headset to play audio through the headset. The interface may further be configured to be connected to another electronic device like an AR device.

It may be understood that an interface connection relationship between the modules that is illustrated in this embodiment of the present invention is only an example for description, and does not constitute a limitation on the structure of the smart watch 100. In some other embodiments of this application, the smart watch 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the smart watch 100. The charging management module 140 may further supply power to the electronic device through the power management module 141 while charging the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may be disposed in the processor 110. In some other embodiments, the power management module 141 and the charging management module 140 may be disposed in a same device.

A wireless communication function of the smart watch 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the smart watch 100 may be configured to cover one or more communication frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the smart watch 100, to wireless communication including 2G/3G/4G/5G and the like The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution, applied to the smart watch 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 in the smart watch 100 is coupled to the mobile communication module 150, and the antenna 2 is coupled to the wireless communication module 160, so that the smart watch 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The smart watch 100 implements the display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the smart watch 100 may include one or N displays 194, where N is a positive integer greater than 1.

The smart watch 100 may implement the photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge coupled device (charge coupled device, CCD), or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the smart watch 100 may include one or N cameras 193, where N is a positive integer greater than 1.

The digital signal processor is configured to process a digital signal, and may process another digital signal in addition to the digital image signal. For example, when the smart watch 100 selects a frequency, the digital signal processor is configured to perform Fourier transform on frequency energy.

The video codec is configured to compress or decompress a digital video. The smart watch 100 may support one or more video codecs. In this way, the smart watch 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, a transmission mode between human brain neurons, and may further continuously perform self-learning. The NPU may implement applications such as intelligent cognition of the smart watch 100, for example, image recognition, facial recognition, speech recognition, and text understanding.

The external memory interface 120 may be configured to be connected to an external storage card, for example, a micro SD card, to extend a storage capability of the smart watch 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound play function or an image play function), and the like. The data storage area may store data (such as audio data and a phone book) and the like created during use of the smart watch 100. In addition, the internal memory 121 may include a high-speed random access memory, or may include a nonvolatile memory, for example, at least one magnetic disk storage device, a flash memory, or a universal flash storage (universal flash storage, UFS). By running instructions stored in the internal memory 121 and/or instructions stored in the memory that is disposed in the processor, the processor 110 executes various functional applications and data processing of the smart watch 100.

The smart watch 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may further be configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The smart watch 100 may listen to music or answer a hands-free call through the speaker 170A.

The receiver 170B, also referred to as an "earpiece", is configured to convert an electrical audio signal into a sound signal. When the smart watch 100 answers a call or receives voice information, the receiver 170B may be placed close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the smart watch 100. In some other embodiments, two microphones 170C may be disposed in the smart watch 100, to collect a sound signal and further implement a noise reduction function. In some other embodiments, three, four, or more microphones 170C may alternatively be disposed in the smart watch 100, to collect a sound signal, reduce noise, identify a sound source, implement a directional recording function, and the like.

The headset jack 170D is configured to be connected to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180Ais configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The smart watch 100 determines pressure intensity based on a capacitance change. When a touch operation is performed on the display 194, the smart watch 100 detects intensity of the touch operation through the pressure sensor 180A. The smart watch 100 may further calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, instructions for viewing an SMS message are executed. When a touch operation whose touch operation intensity is greater than or equal to the first pressure threshold is performed on the SMS message application icon, instructions for creating a new SMS message are executed.

The gyroscope sensor 180B may be configured to determine a motion posture of the smart watch 100. In some embodiments, angular velocities of the smart watch 100 around three axes (namely, an x axis, a y axis, and a z axis) may be determined through the gyroscope sensor 180B. The gyroscope sensor 180B may be configured to implement image stabilization during photographing. For example, when the shutter is pressed, the gyroscope sensor 180B detects a shaking angle of the smart watch 100, and calculates, based on the angle, a distance for which a lens module needs to compensate, so that the lens can move reversely to counteract shaking of the smart watch 100, to implement image stabilization. The gyroscope sensor 180B may further be used for scenarios such as navigation and a motion-sensing game.

The barometric pressure sensor 180C is configured to measure barometric pressure. In some embodiments, the smart watch 100 calculates an altitude based on a barometric pressure value measured by the barometric pressure sensor 180C, to assist in positioning and navigation.

The magnetic sensor 180D includes a Hall sensor. The smart watch 100 may detect opening and closing of a flip cover or a leather case by using the magnetic sensor 180D. In some embodiments, when the smart watch 100 is a flip phone, the smart watch 100 may detect opening and closing of the flip cover by using the magnetic sensor 180D. Further, a feature like automatic unlocking activated when the flip cover is opened is set based on a detected opening or closing state of the leather case or a detected opening or closing state of the flip cover.

The acceleration sensor 180E may detect magnitudes of accelerations of the smart watch 100 in various directions (usually on three axes). When the smart watch 100 is still, a magnitude and a direction of gravity may be detected. The acceleration sensor 180E may further be configured to identify a posture of the electronic device, and is used in landscape/portrait switching and an application like a pedometer.

The distance sensor 180F is configured to measure a distance. The smart watch 100 may measure a distance through infrared or laser. In some embodiments, in a photographing scenario, the smart watch 100 may measure a distance by using the range sensor 180F, to implement quick focusing.

The optical proximity sensor 180G may include, for example, a light-emitting diode (LED) and an optical detector, for example, a photodiode. The light-emitting diode may be an infrared light-emitting diode. The smart watch 100 emits infrared light through the light-emitting diode. The smart watch 100 detects infrared reflected light from a nearby object by using the photodiode. When detecting sufficient reflected light, the smart watch 100 may determine that there is an object near the smart watch 100. When insufficient reflected light is detected, the smart watch 100 may determine that there is no object near the smart watch 100. The smart watch 100 may detect, by using the optical proximity sensor 180G, that the user holds the smart watch 100 close to an ear for a call, to automatically perform screen-off for power saving. The optical proximity sensor 180G may further be used for automatic screen unlocking or locking in a leather case mode or a pocket mode.

The ambient light sensor 180L is configured to sense ambient light brightness. The smart watch 100 may adaptively adjust brightness of the display 194 based on the sensed ambient light brightness. The ambient light sensor 180L may further be configured to automatically adjust white balance during photographing. The ambient light sensor 180L may further cooperate with the optical proximity sensor 180G in detecting whether the smart watch 100 is in a pocket, to prevent an accidental touch.

The fingerprint sensor 180H is configured to collect a fingerprint. The smart watch 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the smart watch 100 executes a temperature processing policy based on a temperature detected by the temperature sensor 180J. For example, when a temperature reported by the temperature sensor 180J exceeds a threshold, the smart watch 100 lowers performance of a processor near the temperature sensor 180J, to reduce power consumption and implement thermal protection. In some other embodiments, when the temperature is less than another threshold, the smart watch 100 heats the battery 142, to avoid abnormal shutdown of the smart watch 100 caused by a low temperature. In some other embodiments, when the temperature is less than still another threshold, the smart watch 100 boosts an output voltage of the battery 142 to avoid abnormal shutdown caused by a low temperature.

The touch sensor 180K is also referred to as a "touch device". The touch sensor 180K may be disposed on the display 194, and the touch sensor 180K and the display 194 form a touchscreen that is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 194. In some other embodiments, the touch sensor 180K may alternatively be disposed on a surface of the smart watch 100, and is at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may be in contact with a human pulse, to receive a blood pressure beating signal. In some embodiments, the bone conduction sensor 180M may alternatively be disposed in a headset, to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The smart watch 100 may receive a button input, and generate a button signal input related to user setting and function control of the smart watch 100.

The motor 191 may generate a vibration prompt. The motor 191 may be configured to provide an incoming call vibration prompt or a touch vibration feedback. For example, touch operations performed on different applications (for example, photographing and audio play) may correspond to different vibration feedback effects. For touch operations performed on different regions of the display 194, the motor 191 may also correspond to different vibration feedback effects. Different application scenarios (for example, a time reminder, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the smart watch 100. The smart watch 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is compatible with different types of SIM cards. The SIM card interface 195 is also compatible with an external storage card. The smart watch 100 interacts with a network through the SIM card, to implement functions such as calling and data communication. In some embodiments, the smart watch 100 uses an eSIM, namely, an embedded SIM card. The eSIM card may be embedded in the smart watch 100, and cannot be separated from the smart watch 100.

It can be understood that the structure illustrated in this embodiment of this application does not constitute a specific limitation on the smart watch 100. In some other embodiments of this application, the smart watch 100 may include more or fewer components than those shown in the figure, or some components may be combined, or some components may be split, or there may be a different component arrangement. The components shown in the figure may be implemented in hardware, software, or a combination of software and hardware.

With reference to the smart watch shown in FIG. 1 and specific application scenarios, the following describes in detail an information exchange method provided in embodiments of this application.

A manner in which a user uses the smart watch on a daily basis is fixed, and the user usually opens fixed software at a fixed time point and/or place.

Therefore, when a screen is on for display, the smart watch may predict and recommend software (that is, recommended software) that the user may want to use, thereby saving time consumed by the user to search for these pieces of commonly used software.

The recommended software may include one or more of a system service of the smart watch, an application provided by the smart watch, or an application provided by a third-party vendor.

A manner in which the smart watch predicts recommended software may be set based on an actual requirement.

Specifically, in some embodiments, the smart watch may obtain behavior information of another electronic device, and predict recommended software based on the behavior information of the another electronic device.

In an actual application scenario, an operation performed by the user on another electronic device may have an associated relationship with an operation performed by the user on the smart watch.

Therefore, the smart watch may obtain the behavior information of the another electronic device, and predict, based on the behavior information of the another electronic device, recommended software that the user may want to use on the smart watch. The behavior information indicates an operation triggered by the user on the another electronic device.

In an example, after the user wears a Bluetooth headset, the Bluetooth headset may broadcast connection information to the outside.

In this case, if the user raises a wrist to view the smart watch, the smart watch may predict, based on the connection information sent by the Bluetooth headset, that there is a high probability that the user wants to connect the Bluetooth headset to the smart watch.

Therefore, in response to the wrist raising operation of the user, the smart watch may turn on a display, and display information about a Bluetooth connection service on the display.

In another example, a mobile phone of the user and the smart watch have been paired and connected. After opening a camera application on the mobile phone, the user raises the wrist to view the smart watch.

In this case, the smart watch may predict, based on camera startup information sent by the mobile phone, that there is a high probability that the user wants to use the smart watch to remotely control the camera application of the mobile phone.

Therefore, in response to the wrist raising operation of the user, the smart watch may turn on the display, and display information about remote control application on the display.

In some other embodiments, the smart watch may predict recommended software based on a usage habit of the user and a current time point/time period.

When using the smart watch, the user may use fixed software at a fixed time point.

Therefore, the smart watch may collect statistics on a time point/time period of historical use of each piece of software of the user, to determine the usage habit of the user.

Then, the smart watch may predict, based on the usage habit of the user and the current time point/time period, recommended software that the user may currently want to use.

In an example, the user often uses a sports application of the smart watch in a time period from 20:00 to 21:00, and the smart watch may collect statistics on and record the usage habit.

When the user turns on the smart watch at 21:05, the smart watch may determine the sports application as recommended software based on the usage habit of the user and the current time period, and display information about the sports application on the display.

In another example, the user often uses a taxi-hailing application of the smart watch at 8:00, and the smart watch may collect statistics on and record the usage habit.

When the user turns on the smart watch at 8:00, the smart watch may determine the taxi-hailing application as recommended software based on the usage habit of the user and the current time point, and display information about the taxi-hailing application on the display.

In some other embodiments, the smart watch may predict recommended software based on a current place.

When using the smart watch, the user may use specific software at a special place.

Therefore, the smart watch may alternatively predict recommended software based on the current place.

In an example, the user raises the wrist in a supermarket to view the smart watch. In this case, the smart watch may predict, based on the current place, that the user may want to use a payment application.

Therefore, in response to the wrist raising operation of the user, the smart watch may turn on the display, and display information about the payment application on the display.

In another example, the user raises the wrist in a cinema to view the smart watch. The smart watch may predict, based on the current place, that the user may want to use a ticket purchase application.

Therefore, in response to the wrist raising operation of the user, the smart watch may turn on the display, and display information about the ticket purchase application on the display.

In some other embodiments, the smart watch may alternatively predict, according to another intelligent algorithm, recommended software that the user may currently want to use. A specific manner in which the smart watch predicts recommended software is not limited in embodiments of this application.

After determining the recommended software, the smart watch may reduce a first display region for displaying watch face information, and display information about the recommended software (that is, recommendation information) in a second display region. The first display region is used to display the watch face information. The second display region is a region that is on the display and that does not overlap the first display region.

The recommendation information may include one or more of information such as an icon of the recommended software and a name of the recommended software.

The watch face information may be understood as information displayed on the display of the smart watch before the smart watch displays the recommendation information.

Before the smart watch displays the recommendation information, a displayable region (that is, a screen display region) of the display of the smart watch is the first display region.

The second display region may be understood as a screen display region that is left after the first display region is reduced. Alternatively, the second display region may be understood as a region that is in the screen display region and that does not intersect the first display region. Alternatively, the second display region may be understood as a region other than the first display region in the screen display region.

A manner in which the smart watch reduces the first display region may be set based on an actual requirement. For example, the smart watch may reduce the first display region in a manner of reducing the watch face information, translating the watch face information, flipping the watch face information, or the like.

Specifically, in some embodiments, the smart watch may reduce the first display region in a manner of proportionally reducing the watch face information.

When reducing the first display region, based on a preset reduction proportion, the smart watch may proportionally reduce all elements in the watch face information or proportionally reduce some elements in the watch face information.

Because the watch face information is reduced, the first display region used to display the watch face information is also proportionally reduced with the watch face information.

The reduction proportion may be a proportion set by default on the smart watch, or may be a proportion set by the user on the smart watch.

The elements may include one or more of elements such as a text, an image, and an icon.

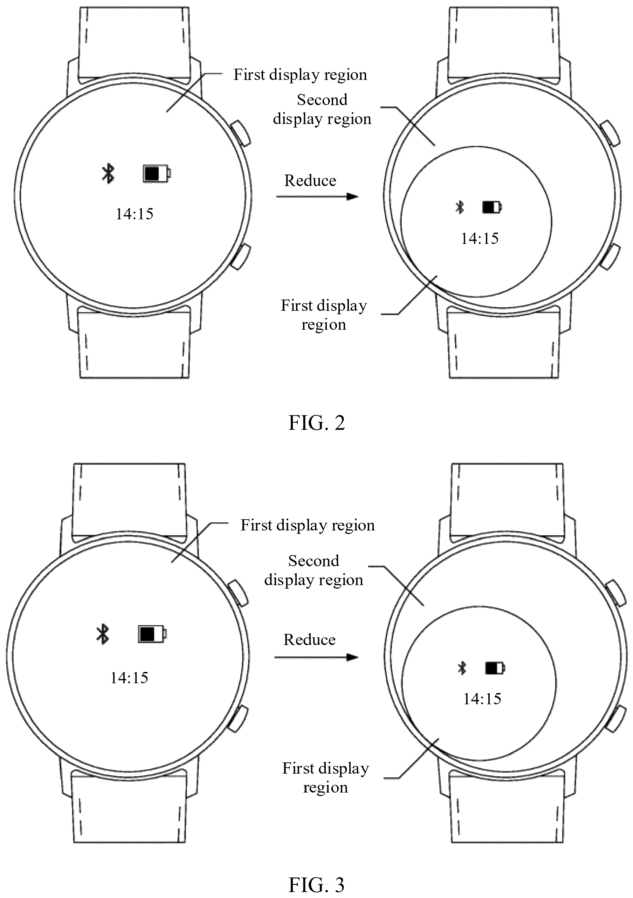

For example, as shown in FIG. 2, the smart watch may proportionally reduce all the elements in the watch face information based on the preset reduction proportion.

In this case, elements such as the text and the icon in the watch face information are proportionally reduced based on the reduction proportion.

Because the watch face information is reduced, the first display region is also proportionally reduced with the watch face information, and the second display region is left.

As shown in FIG. 3, in another example, the smart watch may proportionally reduce an element other than the text in the watch face information based on the preset reduction proportion.

In this case, elements such as the icon and a pattern in the watch face information are proportionally reduced based on the reduction proportion, and the text is not reduced.

Because the watch face information is reduced, the first display region is also proportionally reduced with the watch face information.

When the smart watch reduces the first display region in the manner of proportionally reducing the watch face information, integrity of the watch face information can be ensured, and the recommendation information can be prevented from blocking the watch face information, so that the user can view both the recommendation information and complete watch face information.

In some other embodiments, the smart watch may reduce the first display region by translating the watch face information.

In this embodiment, the smart watch may translate the watch face information, so that some watch face information is moved out of the screen display region, and watch face information in the screen display region is reduced, thereby reducing the first display region.

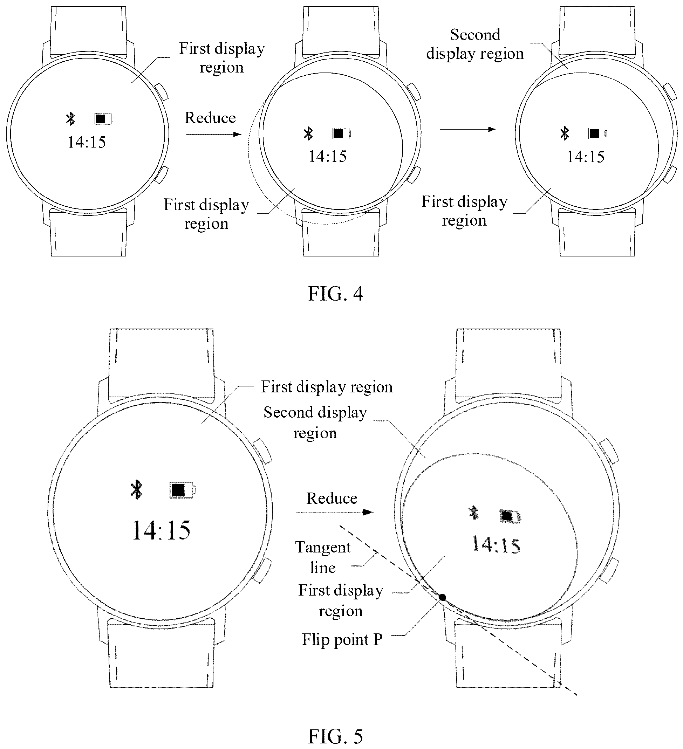

For example, as shown in FIG. 4, when reducing the first display region, the smart watch may translate the watch face information toward a direction (for example, a lower left part) of the screen display region. In this case, watch face information in the lower left part exceeds the screen display region and cannot be displayed.

Correspondingly, because the watch face information is translated toward the lower left part of the screen display region, a screen display region is left in an upper right part of the display, and the left screen display region is the second display region.

When the smart watch reduces the first display region in the manner of translating the watch face information, the smart watch may reduce an edge region of the first display region, to provide space for the second display region. Generally, watch face information displayed by the smart watch in the edge region of the first display region is of low importance. Therefore, in the foregoing manners for reduction, the smart watch can display the recommendation information and minimize impact on original watch face information, so that the user can view both the recommendation information and relatively complete watch face information.

In addition, when the smart watch reduces the first display region in the manner of translating the watch face information, the smart watch may keep a size of each element in the watch face information unchanged, to ensure that the user conveniently views and operates the elements in the watch face information, and avoid a case in which the user cannot clearly see or operate the elements in the watch face information because the elements are excessively small.

In some other embodiments, the smart watch may reduce the first display region in the manner of flipping the watch face information.

In this embodiment, the smart watch may determine a flip point at an edge of the first display region, and flip the watch face information toward an inner side of the display based on the flip point.

Alternatively, the smart watch may determine a flip axis in the first display region, and flip the watch face information in the first display region based on the flip axis.

When flipping the watch face information, the smart watch may reduce an area occupied by the watch face information in the screen display region, thereby reducing the first display region, and providing space for the second display region.

In an example, as shown in FIG. 5, when reducing the first display region, the smart watch may determine a flip point P at an edge of the first display region.

Then, the smart watch may flip the watch face information toward the inner side of the display based on the flip point P. For example, the first display region is a circle, and the circle rotates toward the inner side of the display by using a tangent line that passes through the flip point P as an axis.

In a flipping process, a shape of the watch face information changes due to flipping, thereby reducing the area occupied by the watch face information in the screen display region, and providing space for the second display region.

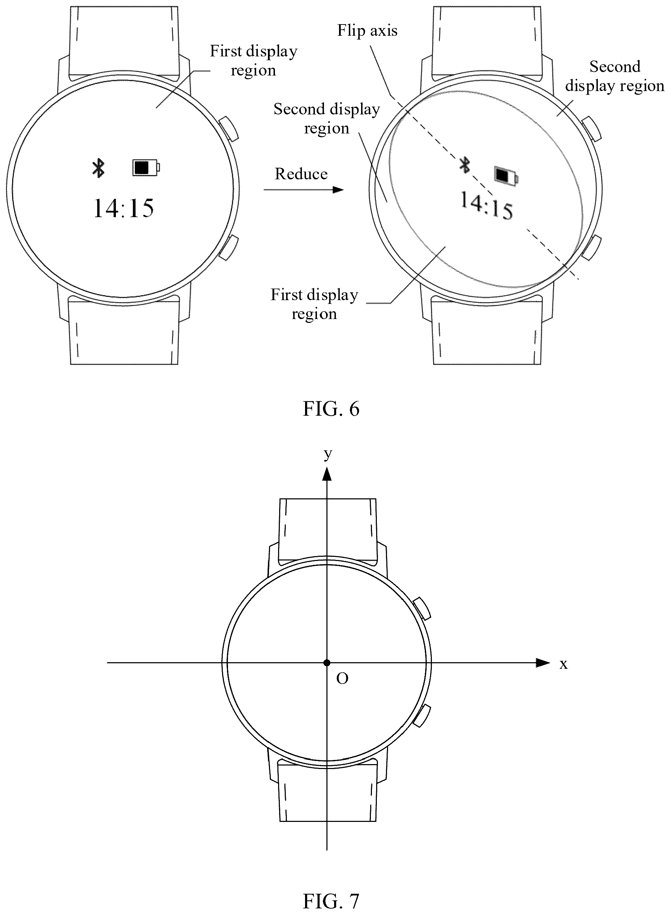

In another example, as shown in FIG. 6, the smart watch may determine a flip axis in the first display region, and flip the watch face information based on the flip axis.

In a flipping process, a shape of the watch face information changes due to flipping, thereby reducing the area occupied by the watch face information in the screen display region, and providing space for the second display region.

When the smart watch reduces the first display region in the manner of flipping the watch face information, integrity of the watch face information can be ensured, and the recommendation information can be prevented from blocking the watch face information, so that the user can view both the recommendation information and complete watch face information.

In some other embodiments, the smart watch may alternatively reduce the first display region in another manner. A specific manner in which the smart watch reduces the first display region is not limited in embodiments of this application.

In addition, in a process of reducing the first display region, the smart watch may set a position of a reduced first display region based on an actual requirement.

Specifically, the first display region may be set concentrically with the screen display region, or may be set eccentrically with the screen display region.

For example, as shown in FIG. 7, a posture displayed by the smart watch when the user raises the wrist to view the smart watch is used as a reference, and an x-axis and a y-axis that are perpendicular to each other are determined on a plane on which the display is located. An origin O at which the x-axis intersects the y-axis is a center of the display.

When the first display region is set eccentrically with the screen display region, the first display region may be located on an upper middle part, a lower middle part, a left middle part, a right middle part, an upper left part, an upper right part, a lower left part, or a lower right part of the screen display region.

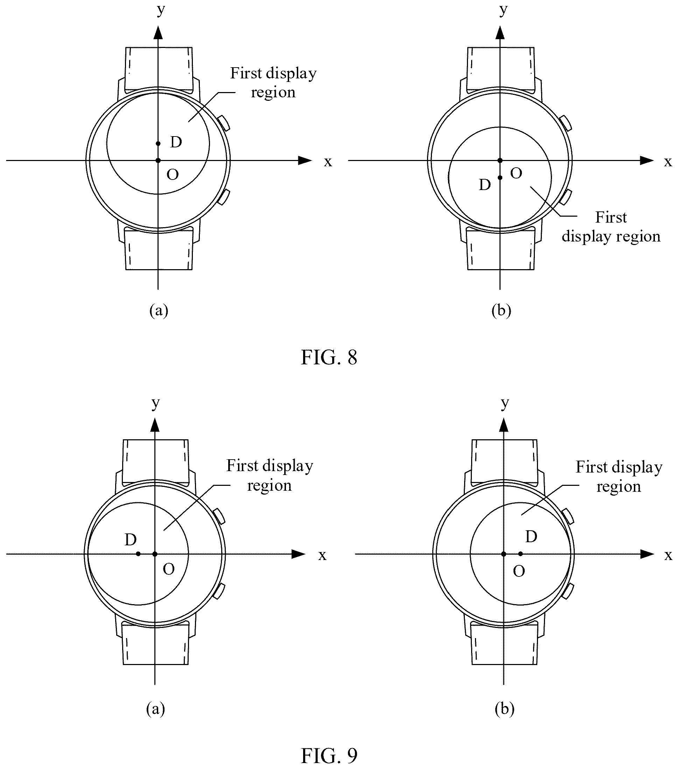

As shown in a scenario (a) in FIG. 8, when a center D of the first display region is located on a positive half axis of the y-axis, the first display region is located on the upper middle part of the screen display region.

As shown in a scenario (b) in FIG. 8, when the center D of the first display region is located on a negative half axis of the y-axis, the first display region is located on the lower middle part of the screen display region.

As shown in a scenario (a) in FIG. 9, when the center D of the first display region is located on a negative half axis of the x-axis, the first display region is located on the left middle part of the screen display region.

As shown in a scenario (b) in FIG. 9, when the center D of the first display region is located on a positive half axis of the x-axis, the first display region is located on the right middle part of the screen display region.

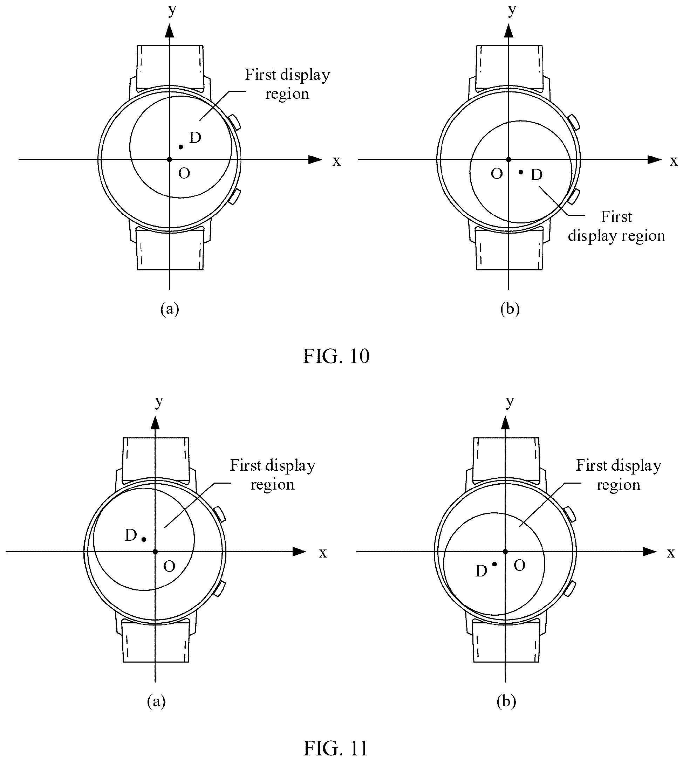

As shown in a scenario (a) in FIG. 10, when the center D of the first display region is located in a region between the positive half axis of the x-axis and the positive half axis of the y-axis, the first display region is located on the upper right part of the screen display region.

As shown in a scenario (b) in FIG. 10, when the center D of the first display region is located in a region between the positive half axis of the x-axis and the negative half axis of the y-axis, the first display region is located on the lower right part of the screen display region.

As shown in a scenario (a) in FIG. 11, when the center D of the first display region is located in a region between the negative half axis of the x-axis and the positive half axis of the y-axis, the first display region is located on the upper left part of the screen display region.

As shown in a scenario (b) in FIG. 11, when the center D of the first display region is located in a region between the negative half axis of the x-axis and the negative half axis of the y-axis, the first display region is located on the lower left part of the screen display region.

A position of the first display region is not limited in embodiments of this application.

In some embodiments, the position of the first display region may be a fixed position.

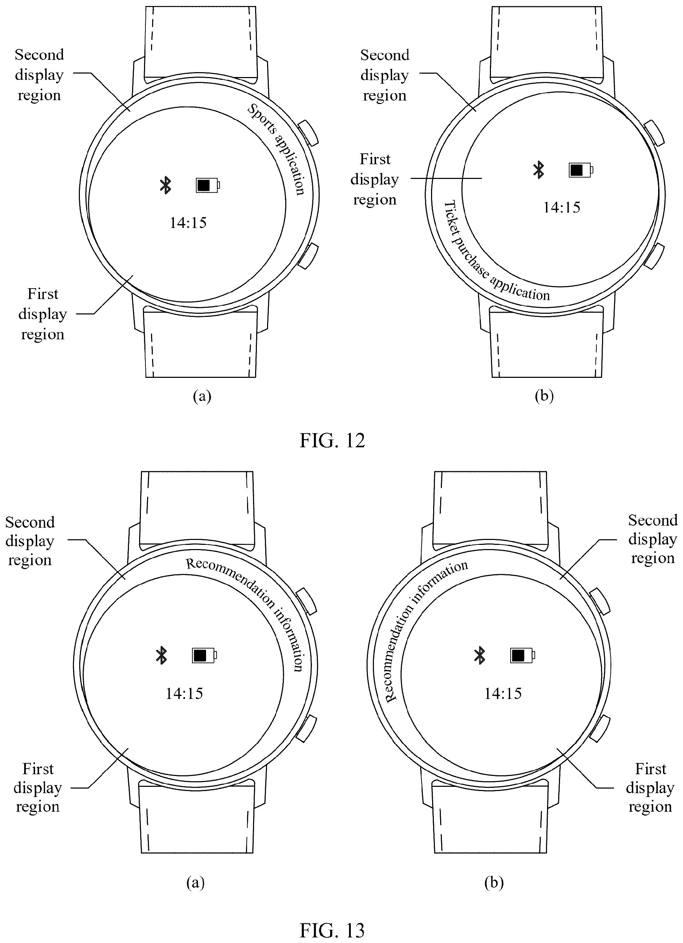

For example, as shown in a scenario (a) in FIG. 12, it is assumed that the first display region is fixedly located on the lower left part of the screen display region, and the second display region is fixedly located on the upper right part of the screen display region.

In this case, each time the smart watch displays the recommendation information, the smart watch reduces the first display region toward the lower left part of the screen display region, and displays the recommendation information (for example, the information about the sports application) on the upper right part of the screen display region.

In some other embodiments, the position of the first display region may be related to a predicting manner corresponding to recommended software.

When predicting recommended software, the smart watch may adjust the position of the first display region based on a predicting manner of the recommended software, so that information about recommended software predicted in different predicting manners is displayed at different positions.

In an example, it is assumed that in a configuration solution of the smart watch, recommendation information predicted based on time is displayed on the upper right part of the screen display region, and recommendation information predicted based on a place is displayed on the lower left part of the screen display region.

In this case, if the smart watch determines, based on a current time point, the sports application as recommended software, as shown in the scenario (a) in FIG. 12, the smart watch may reduce the first display region to the lower left part of the screen display region, leave the second display region on the upper right part of the screen display region, and display the information about the sports application in the second display region.

If the smart watch determines, based on a current place, the ticket purchase application as recommended software, as shown in a scenario (b) in FIG. 12, the smart watch may reduce the first display region to the upper right part of the screen display region, leave the second display region on the lower left part of the screen display region, and display the information about the ticket purchase application in the second display region.

In some other embodiments, the position of the first display region may be related to a position at which the smart watch is worn.

In an actual application scenario, some users may prefer to wear the smart watch on a left hand, and some users may prefer to wear the smart watch on a right hand.

Therefore, to provide a same user experience for different users, when the smart watch is worn on the left hand of the user, the smart watch may set the first display region at a first position; and when the smart watch is worn on the right hand of the user, the smart watch may set the first display region at a second position. The first position and the second position are positions symmetrical along a central axis of the smart watch. It should be noted that the first position and the second position are symmetrical along the central axis, but content displayed at the two positions is not symmetrical (referring to a scenario (a) in FIG. 13 and a scenario (b) in FIG. 13).

In an example, when the smart watch is worn on the left hand of the user, as shown in the scenario (a) in FIG. 13, when displaying the recommendation information, the smart watch may reduce the first display region to the lower left part of the screen display region, and display the recommendation information on the upper right part of the screen display region.

When the smart watch is worn on the right hand of the user, as shown in the scenario (b) in FIG. 13, when displaying the recommendation information, the smart watch may reduce the first display region to the lower right part of the screen display region, and display the recommendation information on the upper left part of the screen display region.

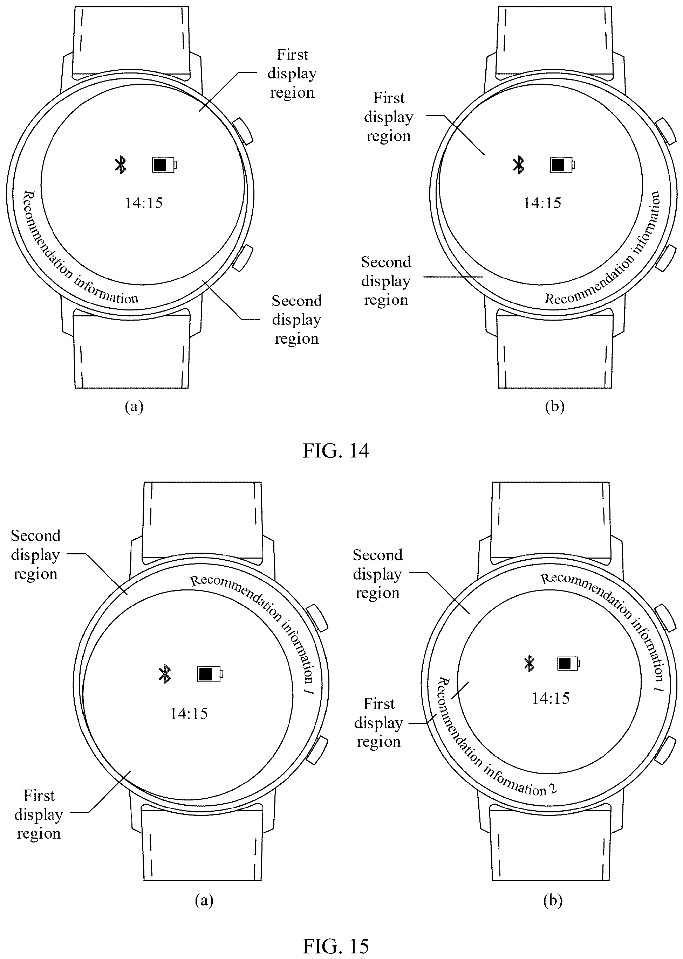

In another example, when the smart watch is worn on the left hand of the user, as shown in a scenario (a) in FIG. 14, when displaying the recommendation information, the smart watch may reduce the first display region to the upper right part of the screen display region, and display the recommendation information on the lower left part of the screen display region.

When the smart watch is worn on the right hand of the user, as shown in a scenario (b) in FIG. 14, when displaying the recommendation information, the smart watch may reduce the first display region to the upper left part of the screen display region, and display the recommendation information on the lower right part of the screen display region.

Because most users wear the watch on a left wrist, currently, most watches consider only user experience of a user wearing the watch on the left hand, and ignore user experience of a user wearing the watch on the right hand.

However, in the position adjustment solution provided above, the smart watch may correspondingly adjust the position of the first display region based on wearing habits of different users. In this way, the user wearing the watch on the left hand and the user wearing the watch on the right hand can have a same user experience, experience of the user wearing the watch on the right hand is fully considered, target users of the smart watch are increased, and the user can flexibly adjust the position at which the smart watch is worn.

In some other embodiments, the position of the first display region may be related to a quantity of recommendation information.

In this embodiment, a display solution for different quantities of recommendation information may be configured for the smart watch, and the display solution is used to configure a size and/or position of the first display region.

When obtaining recommendation information, the smart watch may adjust the size and/or position of the first display region based on a quantity of recommendation information that needs to be displayed and the display solution.

For example, as shown in a scenario (a) in FIG. 15, when obtaining recommendation information 1, the smart watch may reduce the first display region to the lower left part of the screen display region, and display the recommendation information 1 on the upper right part of the screen display region.

As shown in a scenario (b) in FIG. 15, if the smart watch obtains recommendation information 2 when displaying the recommendation information 1, the smart watch may further reduce the first display region, set the first display region concentrically with the screen display region, display the recommendation information 1 on the upper right part of the screen display region, and display the recommendation information 2 on the lower left part of the screen display region.

In some other embodiments, the smart watch may alternatively set the position of the first display region based on another factor. A specific manner in which the smart watch sets the position of the first display region is not limited in embodiments of this application.

In addition, when obtaining a plurality of pieces of recommendation information, the smart watch may display all the recommendation information in the second display region, or the smart watch may display some of the recommendation information in the second display region.

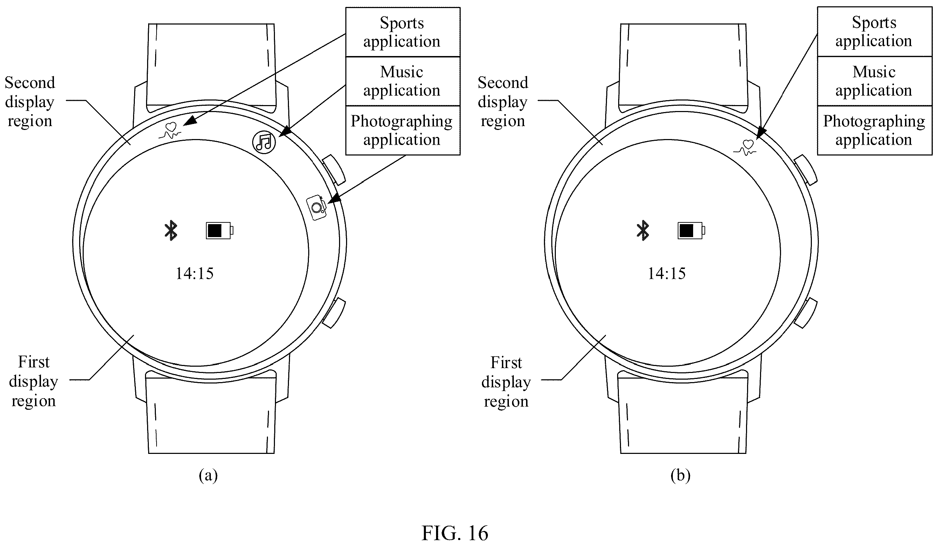

In an example, when the smart watch predicts three pieces of recommended software: a sports application, a music application, and a photographing application, as shown in a scenario (a) in FIG. 16, the smart watch may display icons corresponding to the three pieces of recommended software in the second display region.

In another example, the smart watch also predicts the three pieces of recommended software: the sports application, the music application, and the photographing application, but as shown in a scenario (b) in FIG. 16, the smart watch may display only the icon corresponding to the sports application in the second display region.

When the smart watch displays only some of the recommendation information in the second display region, the smart watch may perform switching to display different recommendation information in response to a switching operation of the user.

The switching operation may include one or more of operations such as a touch operation, an operation on a physical component, and a gesture operation.

For example, it is assumed that the smart watch predicts the three pieces of recommended software: the sports application, the music application, and the photographing application, and the smart watch displays the icon of the sports application in the second display region.

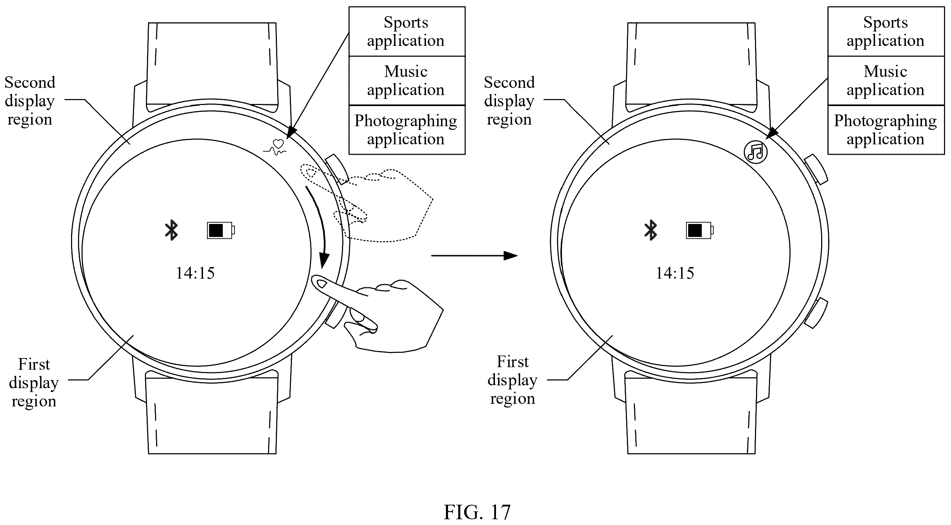

In an example, as shown in FIG. 17, when the user wants to view other recommendation information, the user may perform a sliding touch operation in a clockwise direction after a finger touches the second display region on the display.

In this case, the smart watch may perform switching to display the icon of the music application in the second display region in response to the sliding touch operation of the user.

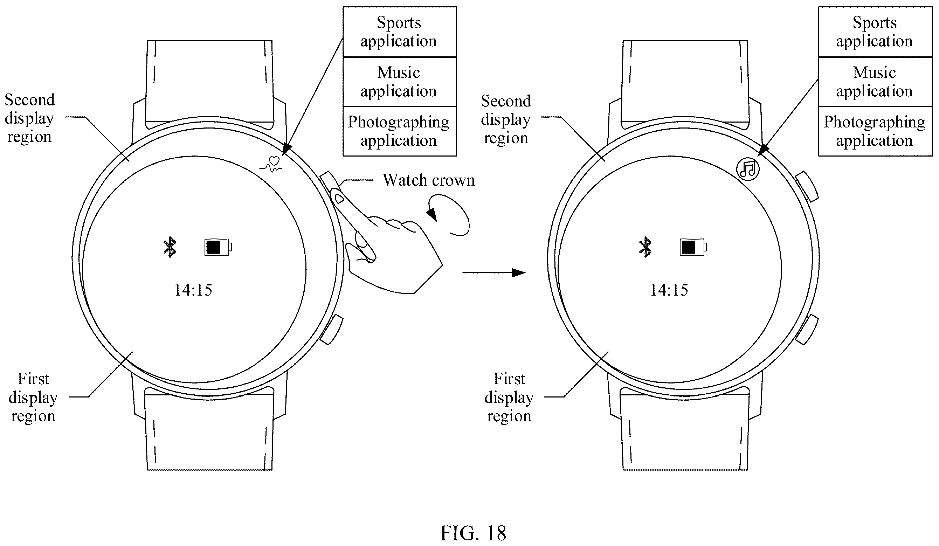

In another example, as shown in FIG. 18, a rotatable watch crown is disposed on the smart watch. When wanting to view other recommendation information, the user may rotate the watch crown with a finger.

In this case, the smart watch may perform switching to display the icon of the music application in the second display region in response to the rotation operation performed by the user on the watch crown.

After the user views the recommendation information, if software recommended in the recommendation information is software that the user wants to use, the user may perform a first operation on the smart watch. In this case, the smart watch may open, in response to the first operation of the user, the recommended software corresponding to the recommendation information.

If software in the recommendation information is not software that the user wants to use, the user may perform a second operation on the smart watch. In this case, in response to the second operation of the user, the smart watch may restore the first display region to the entire screen display region, and close the recommendation information.

Forms of the first operation and the second operation may be set based on an actual requirement.

In some embodiments, in response to a touch operation of the user, the smart watch may open recommended software corresponding to recommendation information, or close the recommendation information.

In this embodiment, the first operation may include a first touch operation, and the second operation may include a second touch operation.

The smart watch may open, in response to the first touch operation of the user, recommended software corresponding to recommendation information. In addition, the smart watch may close the recommendation information in response to the second touch operation of the user.

The first touch operation and the second touch operation may include one or a combination of a plurality of touch operations such as tapping, touching and holding, and sliding.

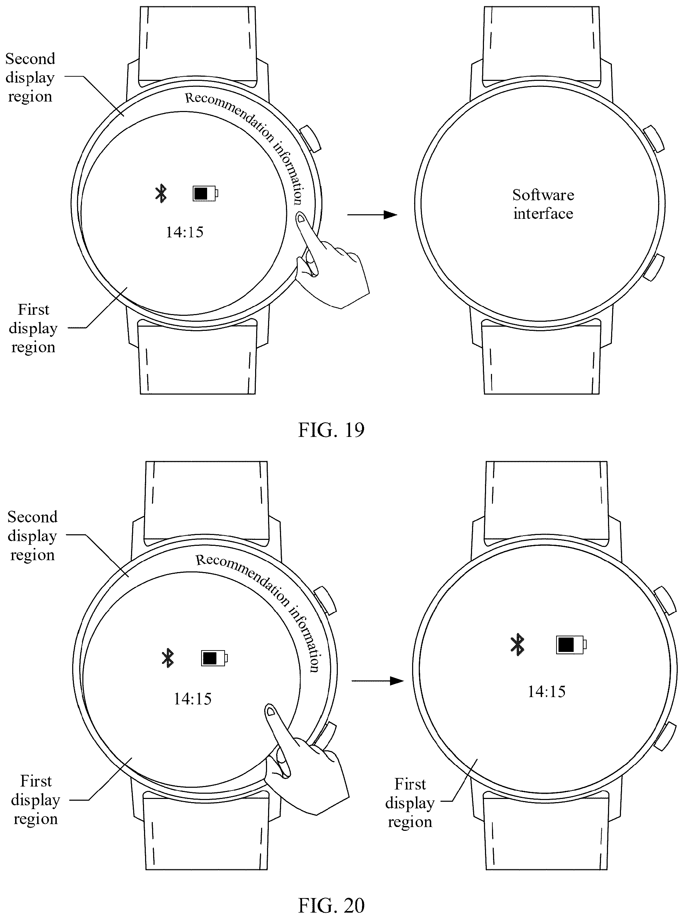

In an example, as shown in FIG. 19, the smart watch displays recommendation information in the second display region. After viewing the recommendation information, the user taps the recommendation information.

In this case, in response to the tapping operation performed by the user on the recommendation information, the smart watch may open recommended software corresponding to the recommendation information, and display a software interface corresponding to the recommended software.

As shown in FIG. 20, the smart watch displays recommendation information in the second display region. After viewing the recommendation information, the user finds that the recommendation information does not include the software that the user wants to use, and taps the first display region.

In this case, in response to the tapping operation performed by the user on the first display region, the smart watch may restore the first display region to the entire screen display region, and stop displaying the recommendation information.

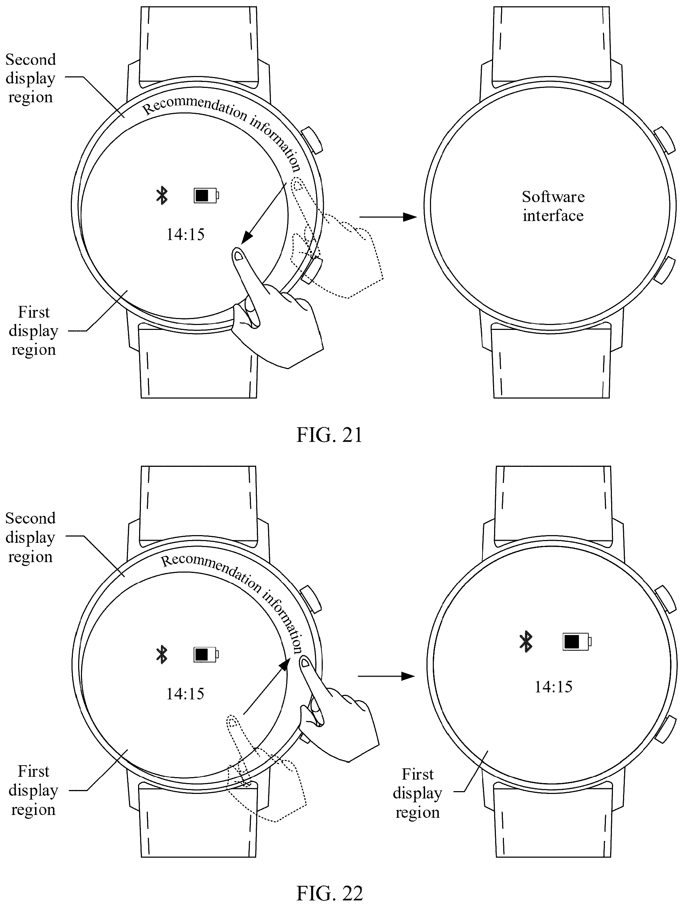

In another example, as shown in FIG. 21, the smart watch displays recommendation information in the second display region. After viewing the recommendation information, the user performs a downward sliding operation on the recommendation information.

In this case, in response to the downward sliding operation performed by the user on the recommendation information, the smart watch may open recommended software corresponding to the recommendation information, and display a software interface corresponding to the recommended software.

As shown in FIG. 22, the smart watch displays recommendation information in the second display region. After viewing the recommendation information, the user finds that the recommendation information does not include the software that the user wants to use, and performs an upward sliding operation on the first display region.

In this case, in response to the upward sliding operation performed by the user on the first display region, the smart watch may restore the first display region to the entire screen display region, and stop displaying the recommendation information.

In some other embodiments, in response to an operation performed by the user on the physical component, the smart watch may open recommended software corresponding to recommendation information, or close the recommendation information.

In this embodiment, the smart watch may be provided with a rotatable or pressable physical component. The physical component may include one or more of physical components such as a rotatable watch crown, a rotatable watch frame, and a pressable physical button.

The first operation may include a first physical operation, and the second operation may include a second physical operation.

When detecting the first physical operation of the user, the smart watch may open recommended software corresponding to the recommendation information.

When detecting the second physical operation of the user, the smart watch may close the recommendation information.

The first physical operation and the second physical operation may include one or a combination of a plurality of operations such as pressing and rotating the physical component.

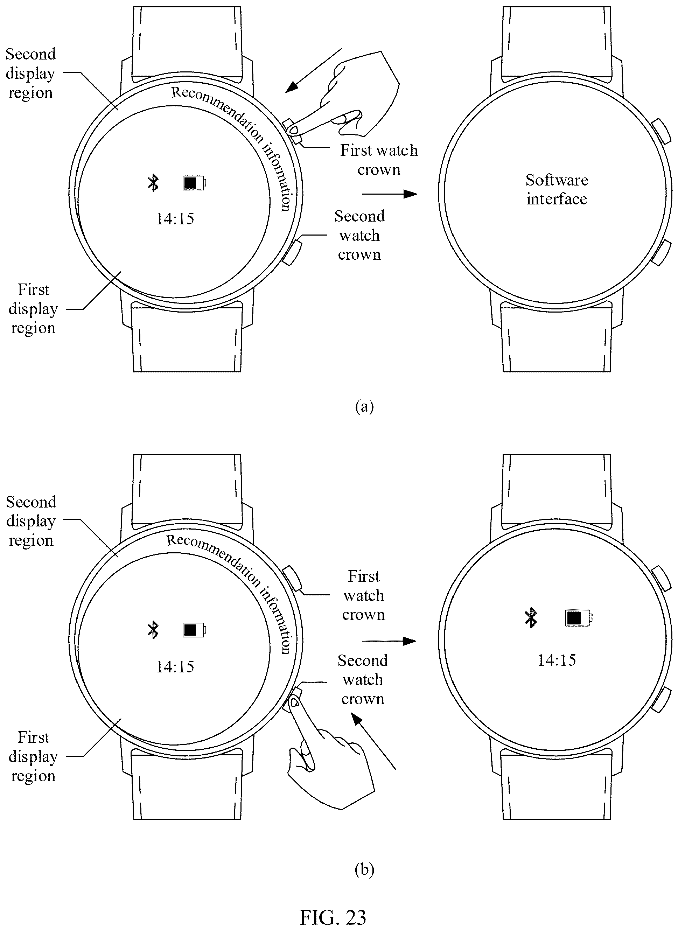

In an example, the smart watch is provided with a pressable first watch crown and a pressable second watch crown. As shown in a scenario (a) in FIG. 23, when the smart watch displays recommendation information in the second display region, if the user presses the first watch crown, in response to an operation of the user, the smart watch may open recommended software corresponding to the recommendation information, and enter a software interface of the recommended software.

As shown in a scenario (b) in FIG. 23, if the user presses the second watch crown, in response to an operation of the user, the smart watch may restore the first display region to the entire screen display region, and stop displaying the recommendation information.

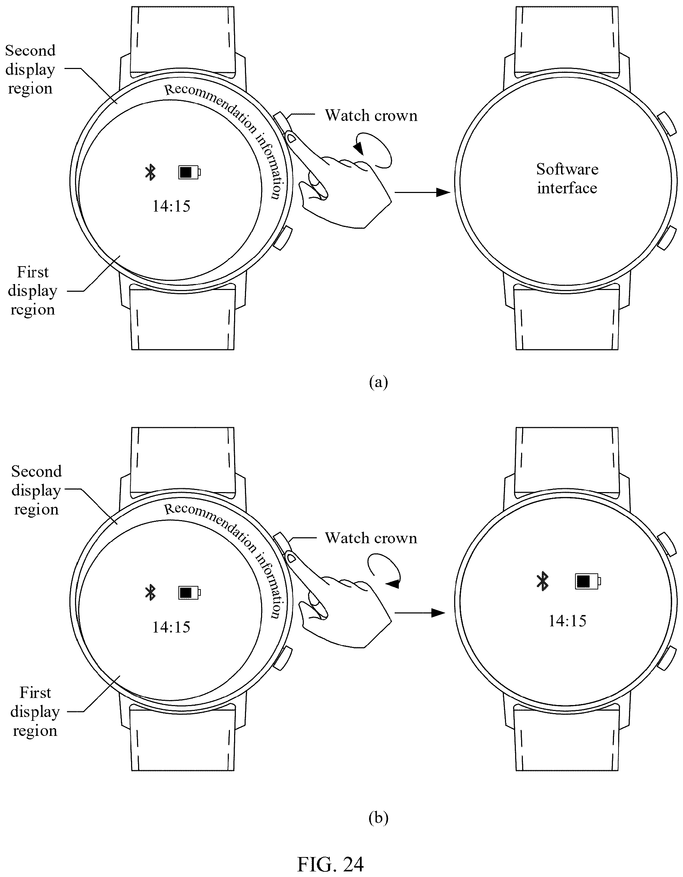

In another example, the smart watch is provided with a rotatable watch crown. As shown in a scenario (a) in FIG. 24, when the smart watch displays recommendation information in the second display region, if the user rotates the watch crown in a first direction, and a rotation angle is greater than or equal to an opening threshold, in response to the operation of the user, the smart watch may open recommended software corresponding to the recommendation information, and enter a software interface of the recommended software.

As shown in a scenario (b) in FIG. 24, if the user rotates the watch crown in a second direction, and a rotation angle is greater than or equal to a closing threshold, in response to the operation of the user, the smart watch may restore the first display region to the entire screen display region, and stop displaying the recommendation information.

It should be noted that the first direction and the second direction may be opposite directions. In some possible implementations, the first direction may be a counter-clockwise direction, and the second direction may be a clockwise direction. In some other possible implementations, the first direction may be the clockwise direction, and the second direction may be the counter-clockwise direction.

Values of the opening threshold and the closing threshold may be set based on an actual requirement. In some examples, both the opening threshold and the closing threshold may be set to 360 degrees. In some other examples, the opening threshold may be set to 360 degrees, and the closing threshold may be set to 180 degrees. In some other examples, the opening threshold and the closing threshold may alternatively be set to other values. Specific values of the opening threshold and the closing threshold are not limited in embodiments of this application.

In some other embodiments, in response to a gesture operation of the user, the smart watch may open recommended software corresponding to recommendation information, or close the recommendation information.

When the smart watch is provided with a motion sensor like a gyroscope sensor or an acceleration sensor, the smart watch may collect motion data of the smart watch through the motion sensor, and identify a gesture of the user based on the motion data.

Therefore, in this embodiment, the first operation may include a first gesture operation, and the second operation may include a second gesture operation.

The smart watch may open, in response to the first gesture operation of the user, recommended software corresponding to recommendation information. In addition, the smart watch may close the recommendation information in response to the second gesture operation of the user.

Specific representation forms of the first gesture operation and the second gesture operation may be set based on an actual requirement.

In an example, when the user raises the wrist to view the smart watch, the smart watch may turn on the display of the smart watch, and detect a position at which the smart watch is worn.

When the smart watch is worn on the left hand of the user, the smart watch may display recommendation information on the upper right part and/or the lower left part of the screen display region. When the smart watch is worn on the right hand of the user, the smart watch may display recommendation information on the upper left part and/or the lower right part of the screen display region.

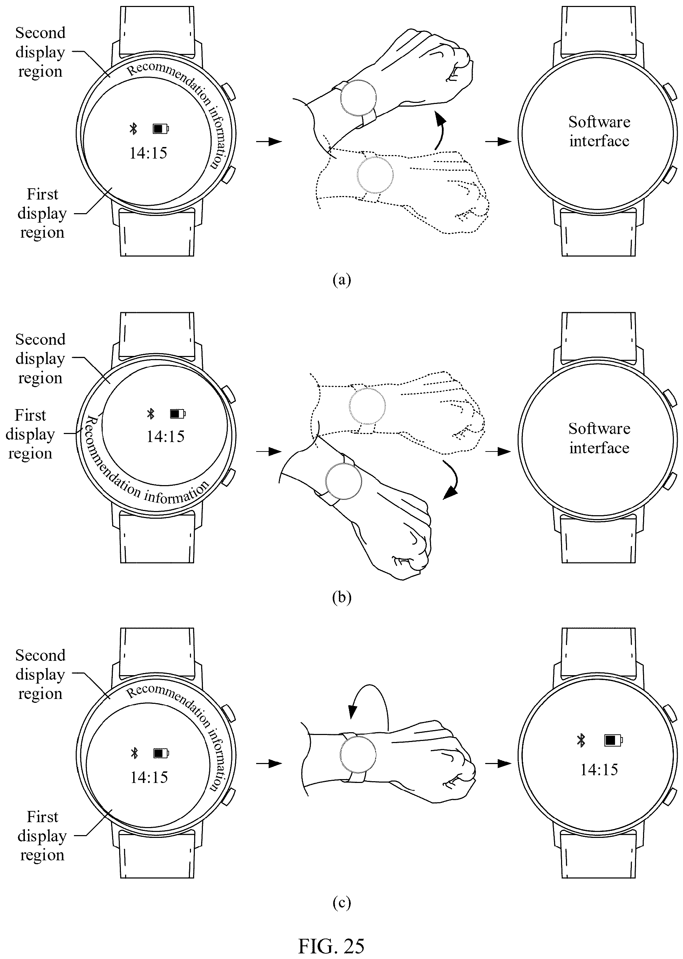

For example, it is assumed that the smart watch is worn on the left hand of the user. As shown in a scenario (a) in FIG. 25, the smart watch may display recommendation information on the upper right part of the screen display region, that is, display a reduced watch face interface on a lower left part of the display.

In this case, if the user raises the wrist, in response to the gesture operation of raising the wrist by the user, the smart watch may open recommended software corresponding to the recommendation information, and enter a software interface of the recommended software.

Alternatively, as shown in a scenario (b) in FIG. 25, the smart watch may display recommendation information on the lower left part of the screen display region, that is, display a reduced watch face interface on the upper right part of the display.

In this case, if the user presses the wrist down, in response to the gesture operation of pressing the wrist down by the user, the smart watch may open recommended software corresponding to the recommendation information, and enter a software interface of the recommended software.

When the user wants to close the recommendation information, as shown in a scenario (c) in FIG. 25, in response to a gesture operation of flipping the wrist by the user, the smart watch may restore the first display region to the entire screen display region, and stop displaying the recommendation information.

In another example, when the smart watch is worn on the left hand of the user, the smart watch may display recommendation information on the upper right part of the screen display region. When the smart watch is worn on the right hand of the user, the smart watch may display recommendation information on the upper left part of the screen display region.

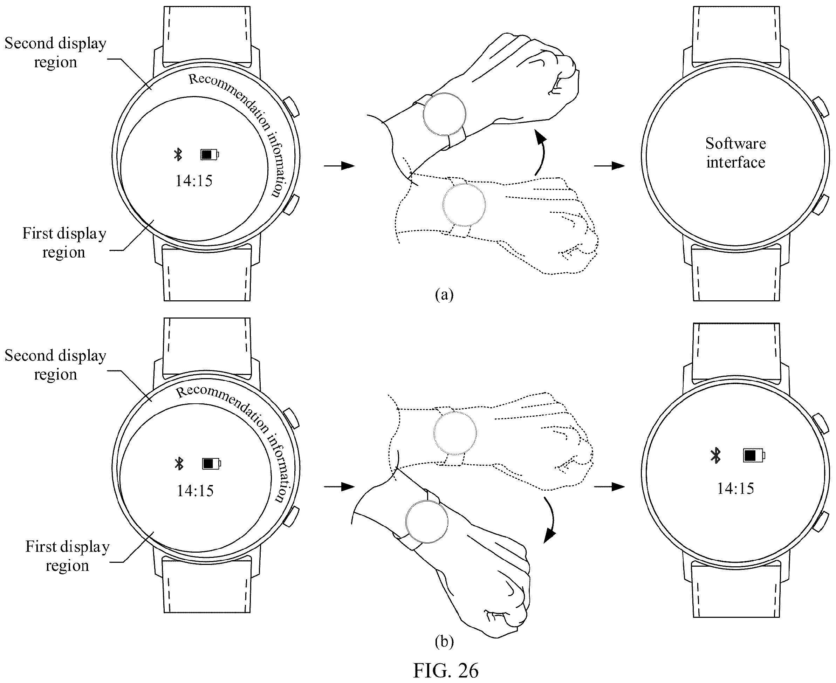

For example, it is assumed that the smart watch is worn on the left hand of the user. As shown in a scenario (a) in FIG. 26, the smart watch may display recommendation information on the upper right part of the screen display region.

In this case, if the user raises the wrist, in response to the gesture operation of raising the wrist by the user, the smart watch may open recommended software corresponding to the recommendation information, and enter a software interface of the recommended software.

In addition, as shown in a scenario (b) in FIG. 26, if the user presses the wrist down, in response to the gesture operation of pressing the wrist down by the user, the smart watch may restore the first display region to the entire screen display region, and stop displaying the recommendation information.

In another example, the reduced first display region may be located on the upper middle part of the screen display region, and the smart watch may display recommendation information on the lower middle part of the screen display region.

In this case, the first gesture operation may be pressing the wrist down. When the user presses the wrist down, in response to the gesture operation of pressing the wrist down by the user, the smart watch may open recommended software corresponding to the recommendation information, and enter a software interface of the recommended software.

Alternatively, the first gesture operation may be raising the wrist. When the user raises the wrist, in response to the gesture operation of raising the wrist by the user, the smart watch may open recommended software corresponding to the recommendation information, and enter a software interface of the recommended software.

In another example, the reduced first display region may be located on the lower middle part of the screen display region, and the smart watch may display recommendation information on the upper middle part of the screen display region.

In this case, the first gesture operation may be raising the wrist. When the user raises the wrist, in response to the gesture operation of raising the wrist by the user, the smart watch may open recommended software corresponding to the recommendation information, and enter a software interface of the recommended software.

Alternatively, the first gesture operation may be pressing the wrist down. When the user presses the wrist down, in response to the gesture operation of pressing the wrist down by the user, the smart watch may open recommended software corresponding to the recommendation information, and enter a software interface of the recommended software.

In another example, the reduced first display region may be located on the left middle part of the screen display region, and the smart watch may display recommendation information on the right middle part of the screen display region.

When the smart watch is worn on the left hand of the user, the first gesture operation may be raising the wrist; or when the smart watch is worn on the right hand of the user, the first gesture operation may be pressing the wrist down.

Alternatively,when the smart watch is worn on the left hand of the user, the first gesture operation may be pressing the wrist down; or when the smart watch is worn on the right hand of the user, the first gesture operation may be raising the wrist.

In another example, the reduced first display region may be located on the right middle part of the screen display region, and the smart watch may display recommendation information on the left middle part of the screen display region.

When the smart watch is worn on the left hand of the user, the first gesture operation may be raising the wrist; or when the smart watch is worn on the right hand of the user, the first gesture operation may be pressing the wrist down.

Alternatively,when the smart watch is worn on the left hand of the user, the first gesture operation may be pressing the wrist down; or when the smart watch is worn on the right hand of the user, the first gesture operation may be raising the wrist.

In addition, when the smart watch displays a plurality of pieces of recommendation information in the second display region, recommendation information at different positions may correspond to different first gesture operations.

In this case, if the smart watch detects the first gesture operation, the smart watch may open, based on a type of the first gesture, recommended software corresponding to the corresponding recommendation information.

In an example, when the user raises the wrist to view the smart watch, the smart watch predicts four pieces of recommendation information: recommendation information 1, recommendation information 2, recommendation information 3, and recommendation information 4.

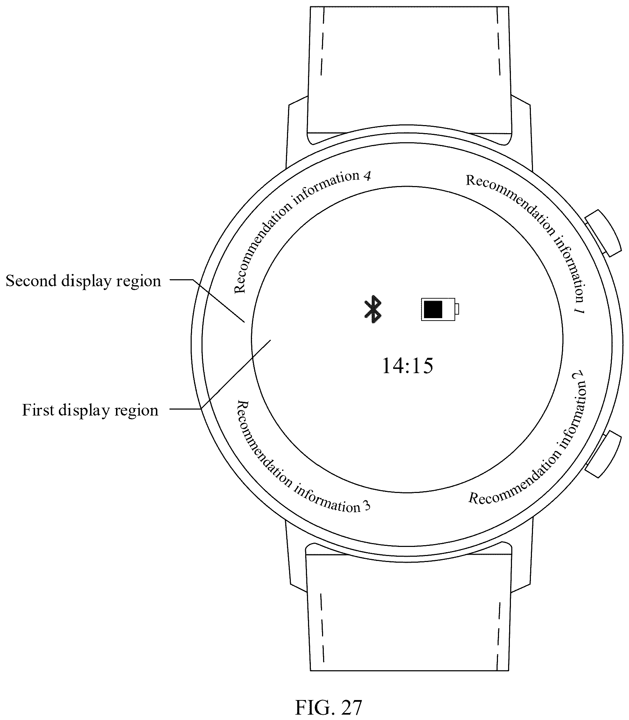

In this case, as shown in FIG. 27, the smart watch may proportionally reduce the first display region. The reduced first display region is set concentrically with the screen display region. Then, the smart watch may display the recommendation information 1 on the upper right part of the screen display region, display the recommendation information 2 on the lower right part of the screen display region, display the recommendation information 3 on the lower left part of the screen display region, and display the recommendation information 4 on the upper left part of the screen display region.

After viewing the recommendation information, the user may select recommendation information at different positions through different types of first gesture operations, and open recommended software corresponding to the recommendation information.

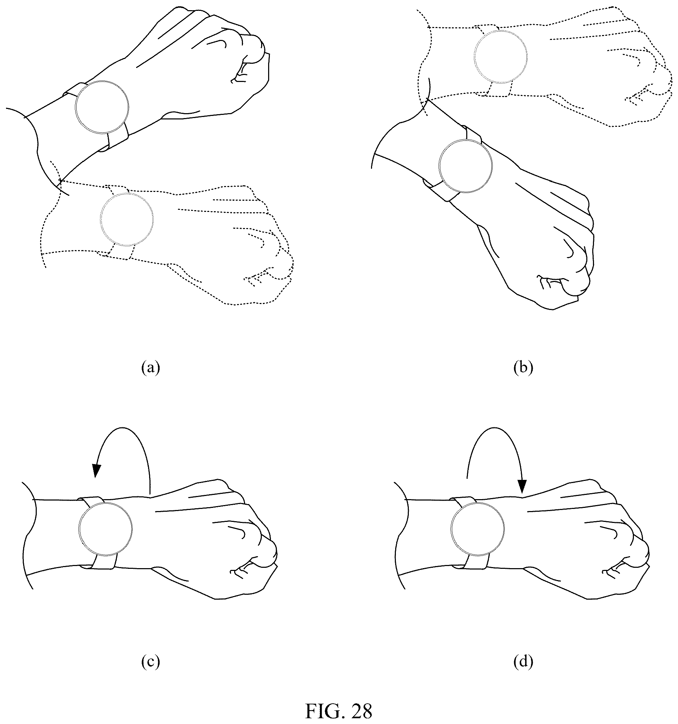

For example, as shown in a scenario (a) in FIG. 28, if the smart watch detects a gesture operation of raising the wrist by the user, the smart watch may determine that the recommendation information 1 on the upper right part of the screen display region is selected, and open recommended software corresponding to the recommendation information 1.

As shown in a scenario (b) in FIG. 28, if the smart watch detects a gesture operation of pressing the wrist down by the user, the smart watch may determine that the recommendation information 3 on the lower left part of the screen display region is selected, and open recommended software corresponding to the recommendation information 3.

As shown in a scenario (c) in FIG. 28, if the smart watch detects a gesture operation of flipping the wrist outward by the user, the smart watch may determine that the recommendation information 4 on the upper left part of the screen display region is selected, and open recommended software corresponding to the recommendation information 4.

As shown in a scenario (d) in FIG. 28, if the smart watch detects a gesture operation of flipping the wrist inward by the user, the smart watch may determine that the recommendation information 2 on the lower right part of the screen display region is selected, and open recommended software corresponding to the recommendation information 2.

It can be learned from the foregoing examples that when the user views the smart watch, the smart watch may display recommendation information to the user, and recommend corresponding recommended software to the user. After the user views the recommendation information, if the user wants to open a specific piece of recommended software, the user may perform a corresponding first gesture operation, and the smart watch may determine selected recommendation information based on the first gesture operation, and open corresponding recommended software.

According to the foregoing method, the user may open the recommended software with one hand, freeing the other hand of the user, which is simple to operate and easy to use, and is particularly applicable to a scenario in which the user can use the smart watch with only one hand.

In addition, the gesture operations and functions corresponding to the gesture operations listed in the foregoing examples are only examples for description in embodiments of this application. In an actual application scenario, a gesture operation adopted by the smart watch and a function corresponding to the gesture operation should be set based on an actual requirement. The foregoing examples should not constitute any limitation on the gesture operation adopted by the smart watch and the function corresponding to the gesture operation.

In some other embodiments, the first operation and the second operation may alternatively be represented in other forms. The specific representation forms of the first operation and the second operation are not limited in embodiments of this application.

In addition, in a process of viewing the recommendation information, the user may think that an element in the watch face information is excessively small or hidden, and it is difficult to clearly see the watch face information; or the user may think that an element in the recommendation information is excessively small or not detailed enough, and it is difficult to clearly see the recommendation information.

Therefore, to meet requirements of different users, the smart watch may be provided with a size adjustment function.

When the user performs a size adjustment operation on the smart watch, the smart watch may adjust sizes of the first display region and the second display region in response to the size adjustment operation.

When the smart watch enlarges the first display region and reduces the second display region, the smart watch may increase a size of each element in the watch face information, and/or restore hidden watch face information.

When the smart watch reduces the first display region and enlarges the second display region, the smart watch may increase a size of each element in the recommendation information, and/or increase content included in the recommendation information.

The size adjustment operation may include one or more of operations such as a touch operation and an operation on a physical component.

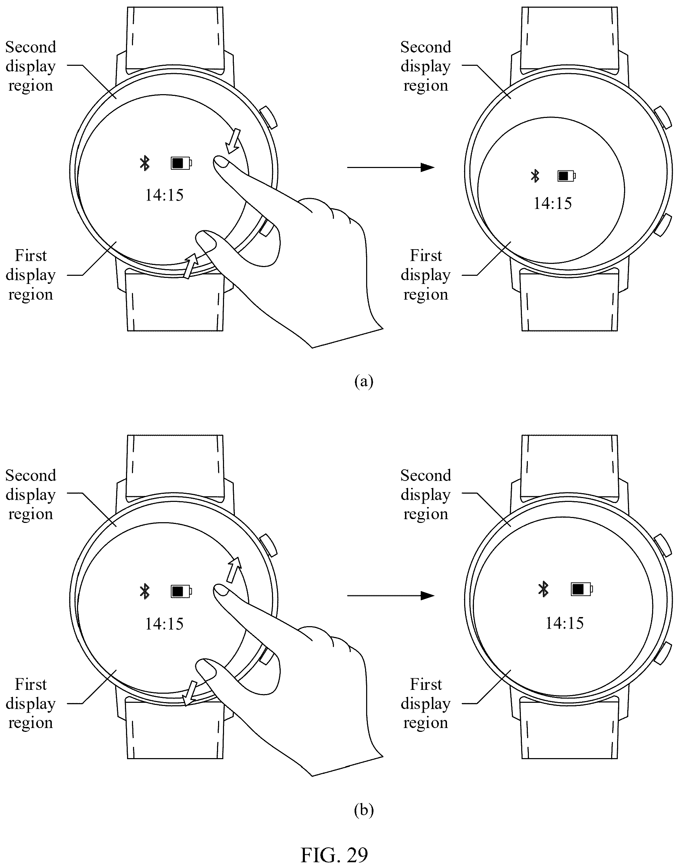

In an example, as shown in a scenario (a) in FIG. 29, when the user slides two fingers closer together on the display of the smart watch, in response to the operation of the user, the smart watch may reduce the first display region and enlarge the second display region.

As shown in a scenario (b) in FIG. 29, when the user slides two fingers apart on the display of the smart watch, in response to the operation of the user, the smart watch may enlarge the first display region and reduce the second display region.

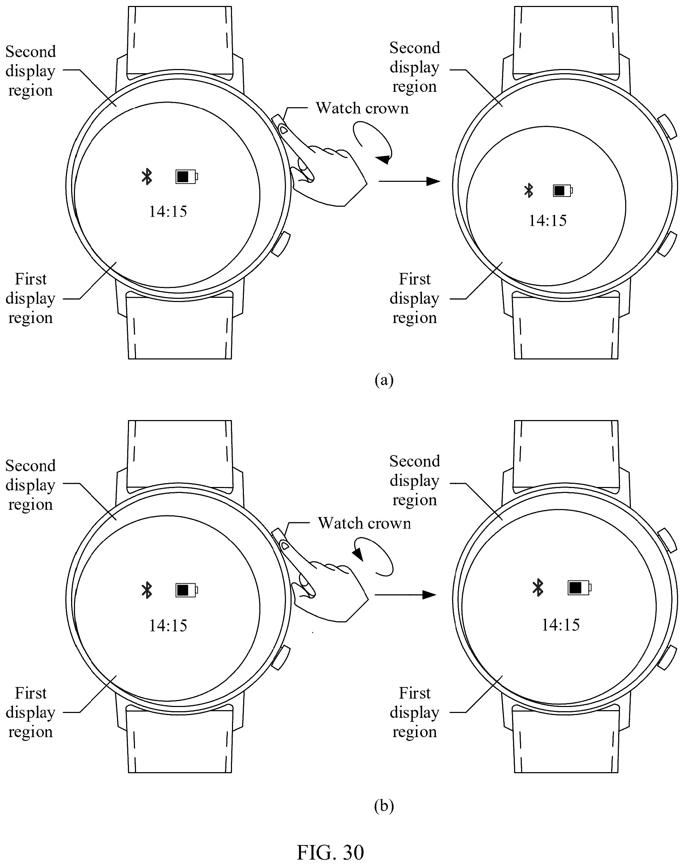

In another example, the smart watch is provided with a rotatable watch crown. As shown in a scenario (a) in FIG. 30, when the smart watch displays recommendation information in the second display region, if the user rotates the watch crown in a first direction, in response to the operation of the user, the smart watch may reduce the first display region and enlarge the second display region.

As shown in a scenario (b) in FIG. 30, if the user rotates the watch crown in a second direction, in response to the operation of the user, the smart watch may enlarge the first display region and reduce the second display region.

In some other examples, the smart watch may alternatively adjust the sizes of the first display region and the second display region in response to a size adjustment operation in another form. A specific form of the size adjustment operation is not limited in embodiments of this application.

In addition, when the user wants to actively enable or disable the recommendation function, the smart watch may enable the recommendation function in response to an enabling operation of the user, and the smart watch may disable the recommendation function in response to a disabling operation of the user.

The enabling operation and the disabling operation may include one or more of operations such as a touch operation and an operation on a physical component.

In an example, the user may search the smart watch level by level for a virtual button that controls the recommendation function. When the recommendation function is in a disabled state, the smart watch may enable the recommendation function in response to a touch operation performed by the user on the virtual button. When the recommendation function is in an enabled state, the smart watch may disable the recommendation function in response to a touch operation performed by the user on the virtual button.

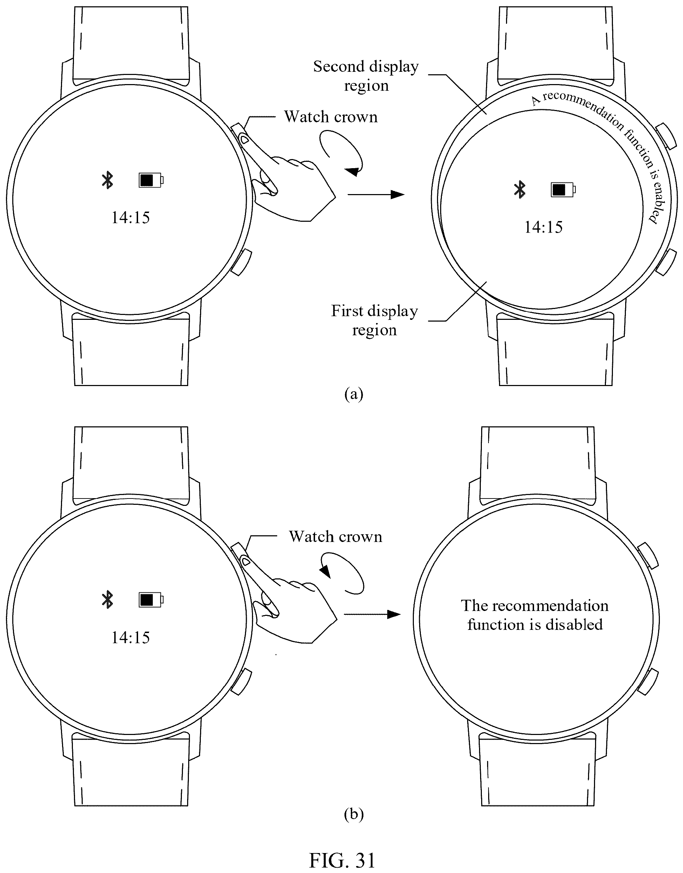

In another example, the smart watch is provided with a rotatable watch crown. As shown in a scenario (a) in FIG. 31, when the smart watch does not enable the recommendation function, if the smart watch detects that the user rotates the watch crown in a first direction, and a rotation angle is greater than or equal to an enabling threshold, the smart watch may enable the recommendation function, reduce the first display region, and prompt the user in the second display region that "the recommendation function is enabled".

As shown in a scenario (b) in FIG. 31, when the smart watch has enabled the recommendation function, if the smart watch detects that the user rotates the watch crown in a second direction, and a rotation angle is greater than or equal to a disabling threshold, the smart watch may disable the recommendation function, and prompt the user that "the recommendation function is disabled".

It should be noted that the enabling threshold and the disabling threshold may be set based on an actual requirement. In some examples, both the enabling threshold and the disabling threshold may be set to 720 degrees. In some other examples, the enabling threshold may be set to 360 degrees, and the disabling threshold may be set to 720 degrees. In some other examples, the enabling threshold and the disabling threshold may alternatively be set to other values. Specific values of the enabling threshold and the disabling threshold are not limited in embodiments of this application.

The foregoing is only illustrative examples of embodiments of this application. In some other examples, the enabling operation and the disabling operation may alternatively be represented in other forms. Specific forms of the enabling operation and the disabling operation are not limited in embodiments of this application.

For ease of understanding, the following describes in detail the information exchange method through a specific application scenario.

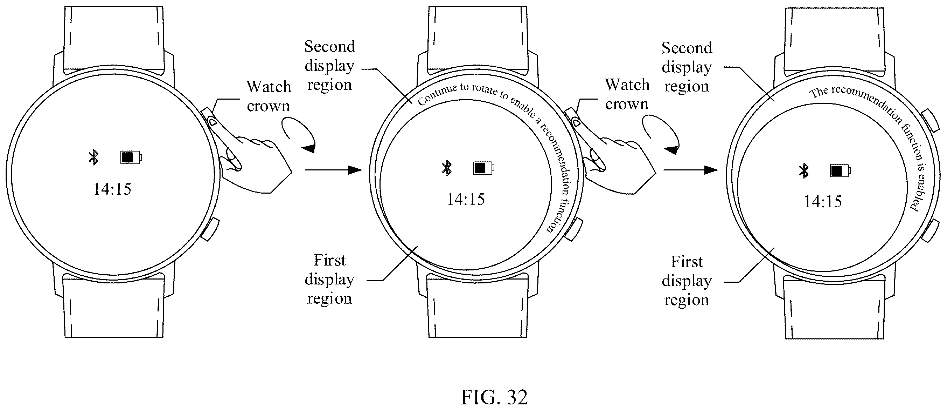

In this example, as shown in FIG. 32, the smart watch may be provided with a rotatable watch crown.

When the smart watch does not enable the recommendation function, after the user rotates the watch crown in the clockwise direction for 360 degrees, the smart watch may reduce the first display region toward the lower left part of the display, and display "continue to rotate to enable the recommendation function" in the second display region.

After the user continues to rotate the watch crown in the clockwise direction for 360 degrees, the smart watch may enable the recommendation function, and display "the recommendation function is enabled" in the second display region.

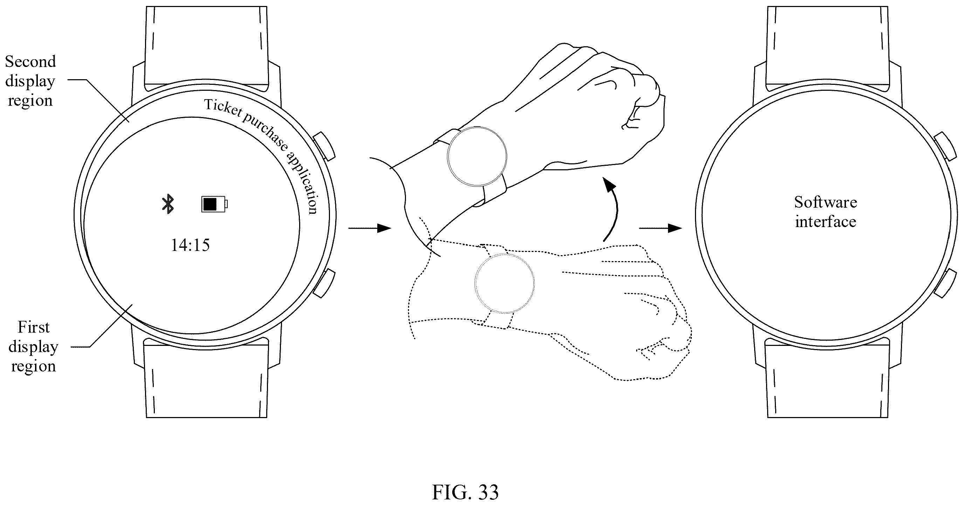

After the recommendation function is enabled, the user goes to a cinema, and raises a wrist to view the smart watch. In this case, the smart watch may predict, based on the current place "cinema", that the user may want to use the ticket purchase application. Therefore, as shown in FIG. 33, in response to the wrist raising operation, the smart watch may turn on the display, proportionally reduce the watch face information to the lower left part of the display, and display recommendation information "ticket purchase application" on the upper right part of the display.

After viewing the recommendation information "ticket purchase application", the user raises a wrist. The smart watch may directly open, in response to the gesture operation of raising the wrist by the user, a software interface corresponding to the "ticket purchase application".

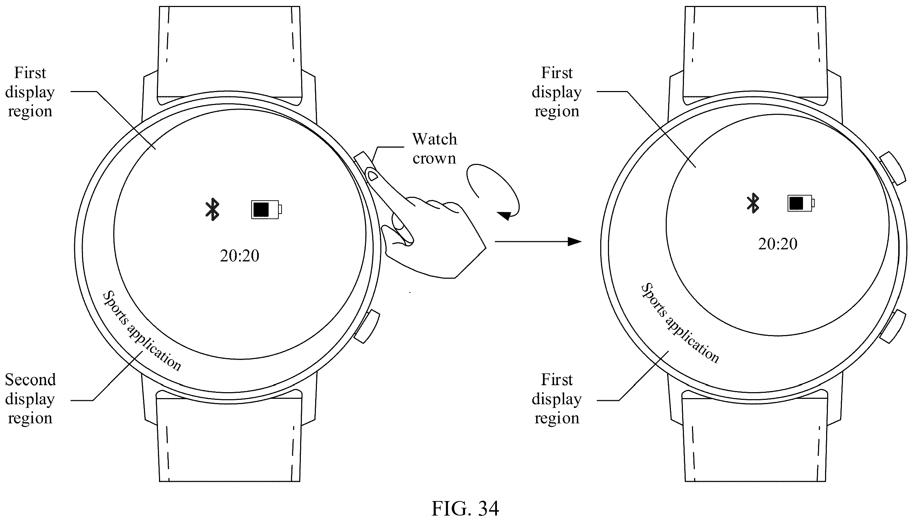

Then, the user goes to a supermarket at 20:20, and raises a wrist to view the smart watch. In this case, the smart watch may predict, based on the current time point "20:20", that the user may want to use the sports application. Therefore, as shown in FIG. 34, in response to the wrist raising operation, the smart watch may turn on the display, proportionally reduce the watch face information to the upper right part of the display, and display recommendation information "sports application" on the lower left part of the display.

When viewing the recommendation information, the user feels that a font of the recommendation information is excessively small, and rotates the watch crown in the clockwise direction. In this case, in response to the operation of the user, the smart watch may reduce the first display region, enlarge the second display region, and enlarge the font of the recommendation information.

After viewing the recommendation information "sports application", the user finds that software corresponding to the recommendation information "sport application" is not software that the user wants to use. Therefore, the user rotates the watch crown in the counter-clockwise direction.

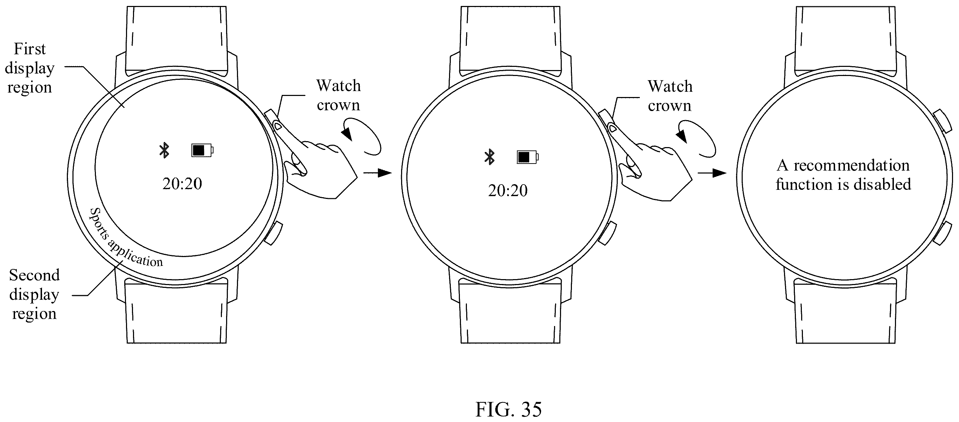

In this case, as shown in FIG. 35, in response to the operation of the user, the smart watch may enlarge the first display region and reduce the second display region. When the first display region is enlarged to the entire screen display region, the recommendation information "sports application" is closed.

Then, the user continues to rotate the watch crown in the counter-clockwise direction. After the user continues to rotate the watch crown in the counter-clockwise direction for 360 degrees, the smart watch may disable the recommendation function, and display "the recommendation function is disabled" on the display.

In conclusion, in the information exchange method provided in this embodiment of this application, when the display is in a screen-on state, the smart watch may reduce the first display region, and display the recommendation information in the second display region.

In a process of reducing the first display region, the smart watch may reduce the first display region in the manner of proportionally reducing the watch face information, shifting the watch face information, flipping the watch face information, or the like, to minimize impact of the recommendation information on the watch face information, so that the user can view both the recommendation information and relatively complete watch face information.

In this case, if the recommendation information includes the software that the user wants to use, the user may directly operate the recommendation information and open the recommended software, thereby saving time for the user to search for the recommended software.

If the recommendation information does not include the software that the user wants to use, the user may search for the software that the user wants to use based on the watch face information in the first display region. The recommendation information does not bring an additional burden to the user in searching for the software.

When the smart watch supports the gesture operation, the user may perform the first gesture operation to open the recommended software with one hand, which is simple to operate and easy to use, and is particularly applicable to a scenario in which various users need to operate the smart watch with one hand.

In addition, the smart watch may further support the user in adjusting the sizes of the first display region and the second display region and quickly enabling or disabling the recommendation function by operating the physical component, performing the gesture operation, or the like.

It should be understood that a sequence of the steps described in the foregoing embodiments does not mean a sequence for performing. A sequence for performing the processes should be determined based on functions and internal logic of the processes, and should not constitute any limitation on implementation processes of embodiments of this application.

Not all the steps described in the foregoing embodiments are necessary. In an actual application scenario, the information exchange method may have more or fewer steps than those in the foregoing embodiments, or implement some of the steps described above.

In addition, although the accompanying drawings of the examples in the foregoing embodiments are all round watch faces, the method described in embodiments of this application is also applicable to a rectangular watch face, an elliptical watch face, or a watch face in another shape. A shape of the watch face does not affect implementation of the method.

Without loss of generality, in addition to being applied to the smart watch, the method may further be applied to intelligent wearable devices with a display, such as an augmented reality (augmented reality, AR) device/a virtual reality (virtual reality, VR) device and smart glasses.

A person of ordinary skill in the art may be aware that, in combination with the examples described in embodiments disclosed in the specification, units and algorithm steps may be implemented by electronic hardware or a combination of computer software and electronic hardware. Whether these functions are performed by hardware or software depends on particular applications and design constraints of the technical solutions. A skilled person may use different methods for particular applications to implement the described functions, but this implementation should not be considered as beyond the scope of this application.

In embodiments provided in this application, it should be understood that the disclosed apparatus/electronic device and method may be implemented in other manners. For example, the described apparatus/electronic device embodiment is only an example. For example, division into the modules or units is only logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated module/unit is implemented in a form of a software functional unit and sold or used as an independent product, the integrated module/unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code. The computer program code may be in a source code form, an object code form, an executable file form, some intermediate forms, or the like. The computer-readable storage medium may include any entity or apparatus capable of carrying the computer program code, a recording medium, a USB flash drive, a removable hard disk drive, a magnetic disk, an optical disc, a computer memory, a read-only memory (ROM, Read-Only Memory), a random access memory (RAM, Random Access Memory), an electrical carrier signal, a telecommunication signal, a software distribution medium, and the like. It should be noted that content included in the computer-readable storage medium may be appropriately added or deleted based on requirements of legislation and patent practice in a jurisdiction. For example, in some jurisdictions, according to legislation and patent practice, the computer-readable storage medium does not include the electrical carrier signal or the telecommunication signal.

In conclusion, the foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An information exchange method, applied to an electronic device (100) and comprising:
displaying, by the electronic device (100), a first interface in a first display region of a display (194);
reducing, by the electronic device (100), the first display region, and displaying recommendation information in a second display region of the display (194), wherein a reduced first display region is still used to display the first interface, and the second display region is a region that is on the display (194) and that does not overlap the reduced first display region;
detecting, by the electronic device (100), a first gesture operation of a user, wherein the first gesture operation is associated with a position of the reduced first display region on the display (194); and
in response to the first gesture operation, opening, by the electronic device (100), an interface corresponding to the recommendation information;
**characterized in that**
the reducing, by the electronic device (100), the first display region comprises:
flipping, by the electronic device, the first interface, wherein in the flipping process, a shape of the first interface changes due to the flipping, thereby reducing an area occupied by the first interface, and providing space for the second display region.

2. The method according to claim 1, wherein the reducing, by the electronic device (100), the first display region comprises:
proportionally reducing, by the electronic device (100), the first interface based on a preset reduction proportion, wherein
the reduced first display region is located in a center of the display (194); or an edge on a side of the reduced first display region is in contact with an edge on a side of the display (194).

3. The method according to claim 1, wherein the flipping, by the electronic device (100), the first interface comprises:
obtaining, by the electronic device (100), a preset flip axis, and flipping the first interface based on the flip axis, wherein the flip axis is located in the first display region.

4. The method according to claim 1, wherein the flipping, by the electronic device (100), the first interface comprises:
obtaining, by the electronic device (100), a preset flip point (P), and flipping the first interface toward an inner side of the display (194) by using a tangent line corresponding to the flip point (P) as a flip axis, wherein the flip point (P) is located at an edge of the first display region, and the tangent line corresponding to the flip point (P) is a tangent line that passes through the flip point (P) and that is of the first display region.

5. The method according to any one of claims 1 to 4, wherein when the reduced first display region is located on a first side of the display (194), the first gesture operation is raising a wrist.

6. The method according to any one of claims 1 to 4, wherein when the reduced first display region is located on a second side of the display (194), the first gesture operation is pressing a wrist down.

7. The method according to claim 5, wherein the first gesture operation is further associated with a position at which the electronic device (100) is worn by the user; and
the first side is a lower left part of the display (194), the electronic device (100) is worn on a left hand of the user, and the first gesture operation is raising a left wrist; or
the first side is an upper left part of the display (194), the electronic device (100) is worn on a left hand of the user, and the first gesture operation is raising a left wrist; or
the first side is a lower right part of the display (194), the electronic device (100) is worn on a right hand of the user, and the first gesture operation is raising a right wrist; or
the first side is an upper right part of the display (194), the electronic device (100) is worn on a right hand of the user, and the first gesture operation is raising a right wrist.

8. The method according to claim 6, wherein the first gesture operation is further associated with a position at which the electronic device (100) is worn by the user; and
the second side is an upper right part of the display (194), the electronic device (100) is worn on a left hand of the user, and the first gesture operation is pressing a left wrist down; or
the second side is a lower right part of the display (194), the electronic device (100) is worn on a left hand of the user, and the first gesture operation is pressing a left wrist down; or
the second side is an upper left part of the display (194), the electronic device (100) is worn on a right hand of the user, and the first gesture operation is pressing a right wrist down; or
the second side is a lower left part of the display (194), the electronic device (100) is worn on a right hand of the user, and the first gesture operation is pressing a right wrist down.

9. The method according to any one of claims 1 to 4, wherein when the electronic device (100) is worn on a first hand of the user, the first gesture operation is raising a wrist.

10. The method according to any one of claims 1 to 4, wherein when the electronic device (100) is worn on a second hand of the user, the first gesture operation is pressing a wrist down.

11. The method according to any one of claims 1 to 10, wherein
when the electronic device (100) is worn on the left hand of the user, the reduced first display region is located at a first position; or
when the electronic device (100) is worn on the right hand of the user, the reduced first display region is located at a second position; and
the first position and the second position are symmetrical along a central axis (y) of the electronic device (100).

12. A watch (100), comprising a memory (121), a processor (110), and a computer program that is stored in the memory 8121) and that can be run on the processor (110), wherein the watch (100) is configured to implement the method according to any one of claims 1 to 11 when executing the computer program.

13. A computer-readable storage medium, wherein the computer-readable storage medium is configured to store a computer program, and when the computer program is executed by a processor, the method according to any one of claims 1 to 11 is implemented.

## Patentansprüche

1. Informationsaustauschverfahren, das auf eine elektronische Vorrichtung (100) angewandt wird und Folgendes umfasst:
Anzeigen, durch die elektronische Vorrichtung (100), einer ersten Schnittstelle in einem ersten Anzeigebereich einer Anzeige (194);
Reduzieren, durch die elektronische Vorrichtung (100), des ersten Anzeigebereiches und Anzeigen von Empfehlungsinformationen in einem zweiten Anzeigebereich der Anzeige (194), wobei ein reduzierter erster Anzeigebereich weiterhin zum Anzeigen der ersten Schnittstelle verwendet wird und der zweite Anzeigebereich ein Bereich ist, der sich auf der Anzeige (194) befindet und der den reduzierten ersten Anzeigebereich nicht überlappt;
Detektieren, durch die elektronische Vorrichtung (100), eines ersten Gestenvorgangs eines Benutzers, wobei der erste Gestenvorgang einer Position des reduzierten ersten Anzeigebereiches auf der Anzeige (194) zugeordnet ist; und
als Reaktion auf den ersten Gestenvorgang, Öffnen, durch die elektronische Vorrichtung (100), einer Schnittstelle, die den Empfehlungsinformationen entspricht;
**dadurch gekennzeichnet, dass**
das Reduzieren, durch die elektronische Vorrichtung (100), des ersten Anzeigebereiches Folgendes umfasst:
Umklappen, durch die elektronische Vorrichtung, der ersten Schnittstelle, wobei sich im Umklappvorgang eine Form der ersten Schnittstelle aufgrund des Umklappens ändert, wodurch eine durch die erste Schnittstelle belegte Fläche reduziert wird und Platz für den zweiten Anzeigebereich bereitgestellt wird.

2. Verfahren nach Anspruch 1, wobei das Reduzieren, durch die elektronische Vorrichtung (100), des ersten Anzeigebereiches Folgendes umfasst:
proportionales Reduzieren, durch die elektronische Vorrichtung (100), der ersten Schnittstelle basierend auf einem zuvor festgelegten Reduktionsverhältnis, wobei
sich der reduzierte erste Anzeigebereich in einer Mitte der Anzeige (194) befindet; oder eine Kante auf einer Seite des reduzierten ersten Anzeigebereiches in Kontakt mit einer Kante auf einer Seite der Anzeige (194) steht.

3. Verfahren nach Anspruch 1, wobei das Umklappen, durch die elektronische Vorrichtung (100), der ersten Schnittstelle Folgendes umfasst:
Erlangen, durch die elektronische Vorrichtung (100), einer zuvor festgelegten Klappachse und Umklappen der ersten Schnittstelle basierend auf der Klappachse, wobei sich die Klappachse in dem ersten Anzeigebereich befindet.

4. Verfahren nach Anspruch 1, wobei das Umklappen, durch die elektronische Vorrichtung (100), der ersten Schnittstelle Folgendes umfasst:
Erlangen, durch die elektronische Vorrichtung (100), eines zuvor festgelegten Klapppunktes (P) und Umklappen der ersten Schnittstelle in Richtung einer Innenseite der Anzeige (194) unter Verwendung einer dem Klapppunkt (P) entsprechenden Tangente als Klappachse, wobei sich der Klapppunkt (P) an einer Kante des ersten Anzeigebereiches befindet und die dem Klapppunkt (P) entsprechende Tangente eine Tangente ist, die durch den Klapppunkt (P) verläuft und die zu dem ersten Anzeigebereich gehört.

5. Verfahren nach einem der Ansprüche 1 bis 4, wobei, wenn sich der reduzierte erste Anzeigebereich auf einer ersten Seite der Anzeige (194) befindet, der erste Gestenvorgang das Anheben eines Handgelenkes ist.

6. Verfahren nach einem der Ansprüche 1 bis 4, wobei, wenn sich der reduzierte erste Anzeigebereich auf einer zweiten Seite der Anzeige (194) befindet, der erste Gestenvorgang das Herabdrücken eines Handgelenkes ist.

7. Verfahren nach Anspruch 5, wobei der erste Gestenvorgang ferner einer Position zugeordnet ist, an der die elektronische Vorrichtung (100) durch den Benutzer getragen wird; und
die erste Seite ein unterer linker Teil der Anzeige (194) ist, die elektronische Vorrichtung (100) an einer linken Hand des Benutzers getragen wird und der erste Gestenvorgang das Anheben eines linken Handgelenkes ist; oder
die erste Seite ein oberer linker Teil der Anzeige (194) ist, die elektronische Vorrichtung (100) an einer linken Hand des Benutzers getragen wird und der erste Gestenvorgang das Anheben eines linken Handgelenkes ist; oder
die erste Seite ein unterer rechter Teil der Anzeige (194) ist, die elektronische Vorrichtung (100) an einer rechten Hand des Benutzers getragen wird und der erste Gestenvorgang das Anheben eines rechten Handgelenkes ist; oder
die erste Seite ein oberer rechter Teil der Anzeige (194) ist, die elektronische Vorrichtung (100) an einer rechten Hand des Benutzers getragen wird und der erste Gestenvorgang das Anheben eines rechten Handgelenkes ist.

8. Verfahren nach Anspruch 6, wobei der erste Gestenvorgang ferner einer Position zugeordnet ist, an der die elektronische Vorrichtung (100) durch den Benutzer getragen wird; und
die zweite Seite ein oberer rechter Teil der Anzeige (194) ist, die elektronische Vorrichtung (100) an einer linken Hand des Benutzers getragen wird und der erste Gestenvorgang das Herabdrücken eines linken Handgelenkes ist; oder
die zweite Seite ein unterer rechter Teil der Anzeige (194) ist, die elektronische Vorrichtung (100) an einer linken Hand des Benutzers getragen wird und der erste Gestenvorgang das Herabdrücken eines linken Handgelenkes ist; oder
die zweite Seite ein oberer linker Teil der Anzeige (194) ist, die elektronische Vorrichtung (100) an einer rechten Hand des Benutzers getragen wird und der erste Gestenvorgang das Herabdrücken eines rechten Handgelenkes ist; oder
die zweite Seite ein unterer linker Teil der Anzeige (194) ist, die elektronische Vorrichtung (100) an einer rechten Hand des Benutzers getragen wird und der erste Gestenvorgang das Herabdrücken eines rechten Handgelenkes ist.

9. Verfahren nach einem der Ansprüche 1 bis 4, wobei, wenn die elektronische Vorrichtung (100) an einer ersten Hand des Benutzers getragen wird, der erste Gestenvorgang das Anheben eines Handgelenkes ist.

10. Verfahren nach einem der Ansprüche 1 bis 4, wobei, wenn die elektronische Vorrichtung (100) an einer zweiten Hand des Benutzers getragen wird, der erste Gestenvorgang das Herabdrücken eines Handgelenkes ist.

11. Verfahren nach einem der Ansprüche 1 bis 10, wobei,
wenn die elektronische Vorrichtung (100) an der linken Hand des Benutzers getragen wird, sich der reduzierte erste Anzeigebereich an einer ersten Position befindet; oder,
wenn die elektronische Vorrichtung (100) an der rechten Hand des Benutzers getragen wird, sich der reduzierte erste Anzeigebereich an einer zweiten Position befindet; und
die erste Position und die zweite Position entlang einer Mittelachse (y) der elektronischen Vorrichtung (100) symmetrisch sind.

12. Uhr (100), umfassend einen Speicher (121), einen Prozessor (110) und ein Computerprogramm, das in dem Speicher 8121) gespeichert ist und das auf dem Prozessor (110) laufen kann, wobei die Uhr (100) dazu konfiguriert ist, beim Ausführen des Computerprogramms das Verfahren nach einem der Ansprüche 1 bis 11 umzusetzen.

13. Computerlesbares Speichermedium, wobei das computerlesbare Speichermedium dazu konfiguriert ist, ein Computerprogramm zu speichern, und, wenn das Computerprogramm durch einen Prozessor ausgeführt wird, das Verfahren nach einem der Ansprüche 1 bis 11 umgesetzt wird.

## Revendications

1. Procédé d'échange d'informations, appliqué à un dispositif électronique (100) et comprenant :
l'affichage, par le dispositif électronique (100), d'une première interface dans une première région d'affichage d'un écran (194) ;
la réduction, par le dispositif électronique (100), de la première région d'affichage et l'affichage des informations de recommandation dans une seconde région d'affichage de l'écran (194), dans lequel une première région d'affichage réduite est toujours utilisée pour afficher la première interface, et la seconde région d'affichage est une région qui se trouve sur l'écran (194) et qui ne chevauche pas la première région d'affichage réduite ;
la détection, par le dispositif électronique (100), d'une première opération gestuelle d'un utilisateur, dans lequel la première opération gestuelle est associée à une position de la première région d'affichage réduite sur l'écran (194) ; et
en réponse à la première opération gestuelle, l'ouverture, par le dispositif électronique (100), d'une interface correspondant aux informations de recommandation ;
**caractérisé en ce que**
la réduction, par le dispositif électronique (100), de la première région d'affichage comprend :
le retournement, par le dispositif électronique, de la première interface, dans lequel, au cours du processus de retournement, une forme de la première interface change en raison du retournement, réduisant ainsi une zone occupée par la première interface et fournissant de l'espace pour la seconde région d'affichage.

2. Procédé selon la revendication 1, dans lequel la réception, par le dispositif électronique (100), de la première région d'affichage comprend :
la réduction proportionnelle, par le dispositif électronique (100), de la première interface sur la base d'une proportion de réduction prédéfinie, dans lequel
la première région d'affichage réduite est située au centre de l'écran (194) ; ou un bord sur un côté de la première zone d'affichage réduite est en contact avec un bord sur un côté de l'écran (194).

3. Procédé selon la revendication 1, dans lequel le retournement, par le premier dispositif électronique (100), du premier élément d'interface comprend :
l'obtention, par le dispositif électronique (100), d'un axe de retournement prédéfini, et le retournement de la première interface sur la base de l'axe de retournement, dans lequel l'axe de retournement est situé dans la première région d'affichage.

4. Procédé selon la revendication 1, dans lequel le retournement, par le premier dispositif électronique (100), de la première interface comprend :
l'obtention, par le dispositif électronique (100), d'un point de retournement prédéfini (P), et le retournement de la première interface vers un côté intérieur de l'écran (194) à l'aide d'une ligne tangente correspondant au point de retournement (P) comme axe de retournement, dans lequel le point de retournement (P) est situé au niveau d'un bord de la première région d'affichage, et la ligne tangente correspondant au point de retournement (P) est une ligne tangente qui passe par le point de retournement (P) et qui est de la première région d'affichage.

5. Procédé selon l'une quelconque des revendications 1 à 4, dans lequel lorsque la première région d'affichage réduite est située sur un premier côté de l'écran (194), la première opération gestuelle est de lever un poignet.

6. Procédé selon l'une quelconque des revendications 1 à 4, dans lequel lorsque la première région d'affichage réduite est située sur un second côté de l'écran (194), la première opération gestuelle est de presser un poignet vers le bas.

7. Procédé selon la revendication 5, dans lequel la première opération gestuelle est en outre associée à une position dans laquelle le dispositif électronique (100) est porté par l'utilisateur ; et
le premier côté est une partie inférieure gauche de l'écran (194), le dispositif électronique (100) est porté sur une main gauche de l'utilisateur, et la première action gestuelle est de lever un poignet gauche ; ou
le premier côté est une partie supérieure gauche de l'écran (194), le dispositif électronique (100) est porté sur une main gauche de l'utilisateur, et la première action gestuelle est de lever un poignet gauche ; ou
le premier côté est une partie inférieure droite de l'écran (194), le dispositif électronique (100) est porté sur une main droite de l'utilisateur, et la première action gestuelle est de lever un poignet droit ; ou
le premier côté est une partie supérieure droite de l'écran (194), le dispositif électronique (100) est porté sur une main droite de l'utilisateur, et la première action gestuelle est de lever un poignet droit.

8. Procédé selon la revendication 6, dans lequel la première opération gestuelle est en outre associée à une position dans laquelle le dispositif électronique (100) est porté par l'utilisateur ; et
le second côté est une partie supérieure droite de l'écran (194), le dispositif électronique (100) est porté sur une main gauche de l'utilisateur, et la première action gestuelle est de presser un poignet gauche vers le bas ; ou
le second côté est une partie inférieure droite de l'écran (194), le dispositif électronique (100) est porté sur une main gauche de l'utilisateur, et la première action gestuelle est de presser un poignet gauche vers le bas ; ou
le second côté est une partie supérieure gauche de l'écran (194), le dispositif électronique (100) est porté sur une main droite de l'utilisateur, et la première action gestuelle est de presser un poignet droit vers le bas ; ou
le second côté est une partie inférieure gauche de l'écran (194), le dispositif électronique (100) est porté sur une main droite de l'utilisateur, et la première action gestuelle est de presser un poignet droit vers le bas.

9. Procédé selon l'une quelconque des revendications 1 à 4, dans lequel, lorsque le dispositif électronique (100) est porté sur une première main de l'utilisateur, la première opération gestuelle est de lever un poignet.

10. Procédé selon l'une quelconque des revendications 1 à 4, dans lequel, lorsque le dispositif électronique (100) est porté sur une seconde main de l'utilisateur, la première opération gestuelle est de presser un poignet vers le bas.

11. Procédé selon l'une quelconque des revendications 1 à 10, dans lequel
lorsque le dispositif électronique (100) est porté sur la main gauche de l'utilisateur, la première région d'affichage réduite est située au niveau d'une première position ; ou
lorsque le dispositif électronique (100) est porté sur la main droite de l'utilisateur, la première région d'affichage réduite est située au niveau d'une seconde position ; et
la première position et la seconde position sont symétriques le long d'un axe central (y) du dispositif électronique (100).

12. Montre (100), comprenant une mémoire (121), un processeur (110) et un programme informatique qui est stocké dans la mémoire (121) et qui peut être exécuté sur le processeur (110), dans lequel la montre (100) est configurée pour mettre en œuvre le procédé selon l'une quelconque des revendications 1 à 11 lors de l'exécution du programme informatique.

13. Support de stockage lisible par ordinateur, dans lequel le support de stockage lisible par ordinateur est configuré pour stocker un programme informatique, et lorsque le programme informatique est exécuté par un processeur, le procédé selon l'une quelconque des revendications 1 à 11 est mis en œuvre.
